# EUROPEAN PATENT SPECIFICATION

(11) **EP 0 536 921 B1**
(45) Date of publication and mention of the grant of the patent: **27.01.1999**
(21) Application number: 92308711.8
(22) Date of filing: 24.09.1992
(51) Int. Cl.: H04B 7/195

(54) **Satellite/wireless telephone roaming system with link to network database management system**
Schnurloses über Satellit Mobiltelefonsystem mit Verbindung an eine Verwaltungsanordnung einer Netzdatenbank
Système mobile de téléphone sans fil par satellite lié à un système de gestion de base de données du réseau

(30) Priority: 10.10.1991 US 775625
(43) Date of publication of application: 14.04.1993
(73) Proprietor: SPACE SYSTEMS / LORAL INC., Palo Alto, California 94303-4697 (US)
(72) Inventor: Wiedeman, Robert A., Los Altos, California 94024 (US); Monte, Paul A., San Jose, California 95117 (US)
(74) Representative: Crawford, Andrew Birkby

(56) References cited:
- EP-A- 0 421 698
- IEICE TRANSACTIONS vol. E74, no. 8, August 1991, TOKYO,JP; pages 2201 - 2210 , XP268455 KATO ET AL 'current and future mobile satellite communication systems'
- PROCEEDINGS OF THE INTERNATIONAL CONGRESS ON TRANSPORTATION ELECTRONICS October 1990, WARRENDALE,US; pages 503 - 507 , XP223561 TIEDEMANN ET AL 'the omnitracs mobile satellite communications and positioning system'
- Globalstar System Application, submission to the Federal Communications Commission, Washington, D.C., June 3, 1991

## Description

### BACKGROUND OF THE INVENTION

### CROSS-REFERENCE TO RELATED APPLICATION

EP-A-0 506,255 describes a cellular telephone system wherein orbiting satellites contain controllers for switching and controlling call set-up, in conjunction with a ground-based database management system. The present invention provides an alternate solution.

This invention relates to a wireless telephone system for employing one or a plurality of orbiting satellites to allow wireless telephone users (subscribers) communication access to a terrestrial telephone system (whether private, government or common carrier), and particularly to a wireless telephone system, such as a cellular system, which permits subscriber access to terrestrial telephone networks while the subscriber is roaming in areas that do not have cellular telephone services.

There is a need to provide personal communications anywhere on the earth. Current communications systems, for example, cellular telephone systems, require terrestrial cellular relay stations to intercept and link a cellular radiotelephone transmission with conventional switched telephone users and with other cellular telephone users.

Cellular telephone systems have been proposed which account for roamers, i.e., cellular telephone users which roam outside a normal service area. The American Telephone and Telegraph Corp. (AT&T) has proposed an inter-cellular data network for interconnecting terrestrial cellular telephone service areas using a terrestrial packet-switched network that has nodes at the participating cellular telephone service areas wherein packet-switched network data is accumulated in a database of roaming cellular telephone users. The database therein proposed would keep track of roamers and allow terrestrial interconnection of the roamer to the telephone system when the roamer is located in a cellular telephone service area that is remote from a designated home cell. Certain data is collected which would allow routing of calls to the roaming user, allow issuance of billing information, and allow collection of other system operation data. The operation of the system is proposed as follows: A database of roaming users is notified via the user when the user desires to accept or make telephone calls while roaming. The user notifies the system of intention to roam via a digital signal from the cellular telephone. The roaming user is then logged into the database via a terrestrial or other packet-switched network. Upon entering a participating remote cellular telephone service area, the mobile transceiver apparatus would transmit a (burst) digital signal to the cellular telephone operator in the remote service area. The database of roaming users would then be updated to show the user's current service area. Incoming calls normally directed to the user home cell are thus routed to the proper service area and switched to the user. Call screening and other features would allow the user to control the expenses. For outgoing calls, connections are made from the mobile transceiver apparatus to the current service area, which in turn handles connections to the public switched telephone system in the normal manner of cellular telephones. Means may be provided to provide for billing of the user via his home cell due to the database information provided by the packet switched data network.

Efforts are under way to utilize satellite technology in cellular communications. Satellite delivered telephone services to mobile users have been proposed as the Mobile Satellite System (MSS) in the USA. This system is now being implemented by the American Mobile Satellite Corp. (AMSC). It utilizes transceivers in the mobile unit (automobile for example) operating in the L-band (1530-1560 MHz and 1646.5-1660.5 MHz) that communicate to a satellite at geosynchronous orbit. In addition to significant expense to the end user for the transceiver apparatus, the system is subject to noticeable relay delay due to transmission of the signals to and from geosynchronous orbit. Furthermore, the cellular telephone service providers must nevertheless implement a costly additional inter-system network to direct calls to the mobile transceiver apparatus. The current system as envisaged does not have a method for locating the roaming user and directing the call to the user.

US Patent No. 4,972,456 discloses a cellular telephone "satellite" roaming system that uses a satellite system to permit access to the cellular telephone system when a user is located in areas outside of cellular telephone system coverage. This system does not contemplate overhead orbiting satellites, but rather the system would employ subsidiary cell sites in a terrestrial-based cellular communications system.

Other patents relate to general information on cellular telephone roaming systems which permit a user of one cellular system to use another cellular system while traveling in areas outside a home cellular system. These patents include U.S. Patent Nos. 4,901,340; 4,972,460; and 4,833,701.

Motorola, Inc. announced on June 27, 1990 a proposed crosslinked satellite network under the name IRIDIUM. The IRIDIUM system is believed to be described in European Patent Publication EP 365,885, published May 2, 1990, and corresponding to United States Patent Application Serial Number 263,849 filed 28 October 1988. The IRIDIUM system envisions a constellation of seventy-seven low-earth orbiting satellites in seven circular polar orbits for supporting cellular telephone communications on the earth's surface. In the IRIDIUM system, all handoff and relays of communications traffic are handled in space directly between satellites, so that the terrestrial telephone network is bypassed. However, ground signal processing is required to set up and place calls. Calls originating from outside the satellite service areas must interrogate the home location of the user in order to identify the user. The system requires that all satellites be linked constantly to one another. Each of eleven evenly-spaced satellites sharing an orbit is contemplated to project thirty-seven communications cells on the earth's surface. Additionally, each satellite has four intersatellite links, thus forming a goedesic sphere for traffic communication paths. Due to cost and channel limitation, it may be presumed that the IRRIDIUM system will not compete with the services provided by terrestrial-based cellular communications systems. A technical description of this invention is believed to be contained under United States Patent Application Serial No. 263,849 filed October 28, 1988 in the names of Bertiger, Leopold and Peterson.

The paper "Current and Future Mobile Satellite Communication Systems " by Kato et al (IEICE Transactions summarises the development of satellite communication system from international to regional to domestic systems between 1976 and 1991. It postulates a configuration whereby three forthcoming systems (TM1, AMSC and MOBILESAT)interface the public switching telephone network (PSTN) through a gateway so that any subscriber of the satellite systems can communicate with any subscriber of the PSTN, or vice versa.

The article "The OmniTRACS (registered trademark) Mobile Satellite Communications and Positioning System" by Tiedemann et al (Proceedings of the International Congress on Transportation Electronics, October, 1990, Warrendale, US; pages 503 to 507) describes a system for communicating short messages between a central hub, which receives messages for a fleet of moving vehicles, and the moving vehicles, sending the messages to the vehicles via satellite.

By a document dated November 2, 1990, Ellipsat Corporation made application to the Federal Communications Commission for authority to construct an elliptical orbit satellite system to support, among other things, mobile voice services in the United States through a constellation of six satellites. The service has been presented as complementary of and not competitive with existing and future (terrestrial) cellular telephone services. The system contemplates the use by end users of dual-mode transceivers using Code Division Multiple Access (CMDA) modulation to effect communications with earth satellites in extended-coverage elliptical orbit.

The "Globalstar" submission to the Federal Communications Commission (FCC), Washington DC, US dated 3 June 1991, published on 24 October 1991, as File Nos. 19-DSS-P-91(48) CSS-91-014 applying for authority to construct a low earth orbit satellite system broadly sets out, at pages (i) to (vii) and pages 98 to 155, the concept of a satellite system offering global radio-determination satellite services (RDSS) and mobile voice and data services to and from hand-held and vehicle-mounted transmit-and-receive devices, and explains the desirability of combining the use of low-earth orbit (LEO) satellites with existing terrestrial communications systems and efficient spread spectrum techniques. The concept of each satellite, being part of a 24 or 48 satellite constellation, operating as a repeater in space such that it utilizes rather than bypasses existing communications carries, is said to eliminate complex call setup procedures and on-board processing. It is said to be important to be able to connect any mobile user to the closest of a network of gateway stations, each of which is for linking users to existing networks, and six of which are for performing more complex functions than this, such as resource assignment, network timing and coordination, and satellite communications load monitoring. The submission, in addition to serving as an application to construct, acknowledges the need to carry out such copies of a network database in a set of network coordinating gateways. The submission, in addition to serving as an application to construct, acknowledges the need to carry out such experiments as become necessary in order to develop the required gateway technology, and thus acknowledges that further authority may subsequently need to be requested from the FCC. Finally, the submission contains legal documentation concerning the individual applications to construct each of the 48 LEO communications satellites of the proposed system.

Current technology in the cellular telephone industry uses analog transmission at 30 kHz FM with many customer features such as autodial, portable operation etc. The next generation of equipment will be Time Division Multiple Access (TDMA) digital transceivers, due to be introduced in late 1990. Future generations of Cellular Telephones will use Code Division Multiple Access (CDMA) and spread spectrum modulation for solutions to communication traffic saturation of terrestrial cellular systems. Finally, a roaming network is being developed for the purpose of allowing cellular telephone customers the ability to roam from cell system to cell system in the USA (and other regions).

In the development of commercial terrestrial-based cellular telephone systems, it is expected that dual mode radios will be produced that will be able to access both analog and digital systems. With digital radios, additional services are expected to appear such as car to mobile facsimile (car fax), data transmission, computer interconnections and position location services.

Some high usage cellular systems, such as PACTEL's Los Angeles system, are expected to saturate in 1991. PACTEL and other cellular systems are looking toward Time Division Multiple Access (TDMA) as a step toward satisfying future needs. However, the system operators see even more capacity demands and have funded development of a CDMA-based technology. QUALCOMM in San Diego, California, has been funded by NYNEX and others to develop CDMA technology for cellular services. QUALCOMM has demonstrated a 9.6 KBPS voice codec with "toll quality" performance using CDMA technology. CDMA may become an industry standard since it is expected to relieve the "capacity" problem and is inherently less expensive as cell site equipment, particularly for rural service areas (RSAs).

CDMA may be used in connection with implementations of the present invention, but the use of other modulation schemes is not precluded.

The present invention aims to provide a radio communication system capable of servicing a roaming user or the like outside the range of terrestrial relay stations. According to the present invention there is provided a satellite communications system operative in connection with an existing terrestrial communications system, comprising
at least one satellite means in earth orbit;
at least one gateway at a terrestrial location bidirectionally coupled to said terrestrial communications system, said at least one terrestrial gateway further being bidirectionally coupled through first communication links on a first frequency to said at least one satellite means for transmitting communications traffic to, and for receiving communications traffic from, said at least one satellite means, said communications traffic including call set-up control information and call signals;
a plurality of wireless telephone transceivers associated with users of said satellite communications system, each of said transceivers being bidirectionally coupled, in use, through second communications links on a second frequency to said at least one satellite means for transmitting communications traffic to, and for receiving communications traffic from, said at least one satellite means;
a network control means at a terrestrial location for controlling call signals in the terrestrial communications system;
a network database management system for managing a network database containing identification of each active user, location of said active user and a home gateway of said active user;
at least one network coordinating gateway at a terrestrial location coupled to said at least one satellite means through said first communications links for receiving requests for service from active transceivers, said at least one network coordinating gateway including means for selecting a terrestrial gateway to establish a bidirectional communications link between said active transceiver that is requesting service and said terrestrial communications system, said at least one network coordinating gateway further comprising means for maintaining a copy of said network database; and
means for maintaining and updating each said copy of said network database in substantially real time; wherein
communications traffic to an active one of said transceivers is passed through and repeated by said at least one satellite means by being received from one of said first communications links, and transmitted to one of said second communications links, without regard for any informational content of said communications traffic; and wherein
communications traffic from an active one of said transceivers is passed through and repeated by said at least one satellite means, by being received from one of said second communications links and transmitted to one of said first communications links, without regard for any informational content of said communications traffic.

Preferred embodiments of the system operate by effecting communication between a terrestrial wireless telephone end user transceiver apparatus and a terrestrial communications link via only a single relay through a single satellite or a succession of relays through orbiting satellites wherein the relay station (satellite) is in motion relative to the end user transceiver apparatus and to the terrestrial communications link, wherein the ground-based equipment makes the ultimate decision on linking based on satellite ephemeris information and end user information, and wherein the end user transceiver apparatus, the orbiting satellite and the terrestrial communications link cooperate to effect hand-off from a first orbiting satellite to a second orbiting satellite other than the first orbiting satellite. The NCG(s) are capable of receiving requests for calls and participating in the call routing and call setup on an autonomous basis. The satellites are simple relay stations which receive, translate in frequency, amplify and transmit signals.

The present invention offers substantial advantages while integrating with existing telephone systems. The invention allows wireless telephone with automatic switching (cellular) voice, data and facsimile communication to the public-switched telephone network in areas not served by terrestrial cellular telephone systems. The invention in particular will provide enhanced roaming cellular telephone services to cellular telephone service areas that have poor coverage, gaps in coverage, and other service area degradation. As a consequence there is also an increased ability to provide emergency communications services, such as reporting of medical emergencies, roadside breakdowns, tracking of stolen cars and other similar services in all areas served by satellite.

The invention will be better understood by reference to the following detailed description in connection with the accompanying drawings.

### BRIEF DESCRIPTION OF THE DRAWINGS

Fig. 1 is a figurative illustration of an integrated wireless telephone and orbiting satellite communications system in accordance with the invention.

Fig. 2 is a figurative illustration of the integrated wireless telephone and orbiting satellite communications system showing how a first type of duplex communications circuit may be set up.

Fig. 3 is a figurative illustration of the integrated wireless telephone and orbiting satellite communications system showing how a second type of duplex communications circuit may be set up.

Fig. 4 is a system block diagram according to the invention.

Fig. 5 is a block diagram of a wireless transceiver apparatus for use by an end user.

Fig. 6 is a block diagram of a gateway terminal unit for use in a cellular system according to the invention.

Fig. 7 is a block diagram of a network coordinating gateway for use in a system according to the invention.

Fig. 8 is a block diagram of a network control center for use in a system according to the invention.

Fig. 9 is a block diagram of a satellite system for use in a system according to the invention.

Figs. 10A-10L together are a flow chart of operation of a specific embodiment of the invention.

### DESCRIPTION OF SPECIFIC EMBODIMENTS

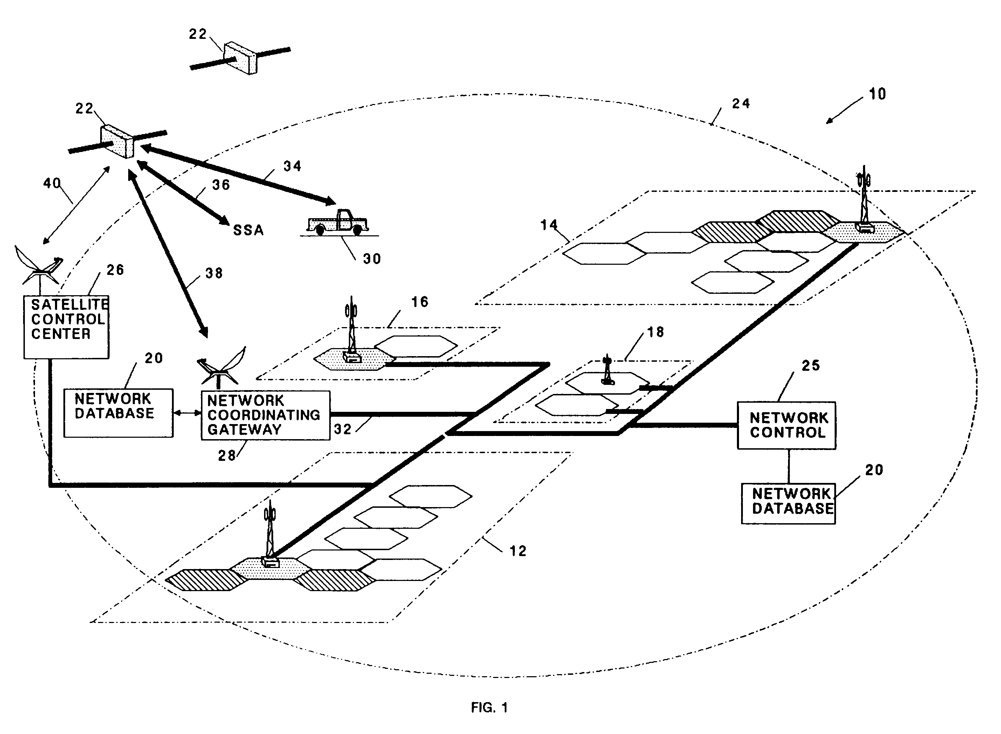

An integrated wireless/satellite communications system 10 according to the invention is shown in Fig. 1. The system 10 may include private, government or cellular telephone systems which themselves comprise gateways 12, 14, 16, 18. The gateways may be conventionally-defined metropolitan service areas (MSAs) 12, 14, 16 and rural service areas (RSAs) 18, government telecommunications gateways, or private network nodes. The system 10 may further include according to the invention a network database 20 of users, a satellite communications system with a single one or a plurality of low-earth orbit satellites 22, each of which services a (moving) satellite service area 24, a network control 25, a satellite control center 26, at least one network coordinating gateway 28, a representative roaming end user 30, a packet switched network 32 and a plurality of satellite communications links, including for example cellular telephone communications links 34, 36, a network communications link 38 and a satellite control link 40.

In the exemplary cellular telephone systems, there is contemplated existing and future terrestrial wireless telephone systems. Herein they may be collectively referred to as a Gateway Telephone Service Areas (GTSAs) or Metropolitan Service Areas (MSAs) or Remote Service Areas (RSAs).

In accordance with the invention, there is provided a Satellite Service Area (SSA) 24 (which may be moving) having a communications link 34 capable of servicing any roaming user 30 within the SSA 24. The satellite control center 26 is to provide for proper operation of the satellite system 22, of the links to and from a plurality of satellites which are passing overhead. The links include, in particular, the Satellite Control Link (SCL) 40, the Network Coordinating Link (NCL) 38 and the Cellular Telephone Links (CTL) 34, 36.

The MSAs and the RSAs may be linked by present or proposed links, such as a nationwide packet switched network (NWN) 32 which may be used to establish the network database 20 of users. The NWN 32 may provide the service areas with information necessary to locate roaming users, login user, logout users, and for call setup.

The satellite system 22 may comprise a single satellite or a constellation of about 24 to 48 satellites preferably in low-earth near circular or possibly elliptical orbits between selected latitudes. Each satellite is provided with command and communications subsystems which are capable of receiving signals, converting them to the downlink frequencies, amplifying signals, and transmitting the signals back to the earth. The satellites do not serve as bypass to ground-based telecommunications facilities.

The satellite control link 40 provides remote control of satellite components and configurations. The network coordinating link 38 provides for data transfer to and from the network coordinating gateway 28 for the purpose of establishing communications to and from the roaming user 30. The wireless telephone links 34, 36 are used for voice and data communications, position location and other services between the user and various wireless telephone systems. The network control center is used to coordinate between NCGs, keep the network database updated to all NCGs, collect billing and system information and to coordinate any information from the satellite control center that the NCG(s) might require such as satellite ephemeris and health.

The wireless telephone user equipment preferably may be any commercially available unit that has the capability of digital signal generation and a compatible modulation scheme with the network into which it is to be integrated combined with digital and frequency generating equipment compatible with the satellite system. Code Division Multiple Access (CDMA) modulation or other modulation compatible with the satellite relay system are contemplated.

### SYSTEM OPERATION:

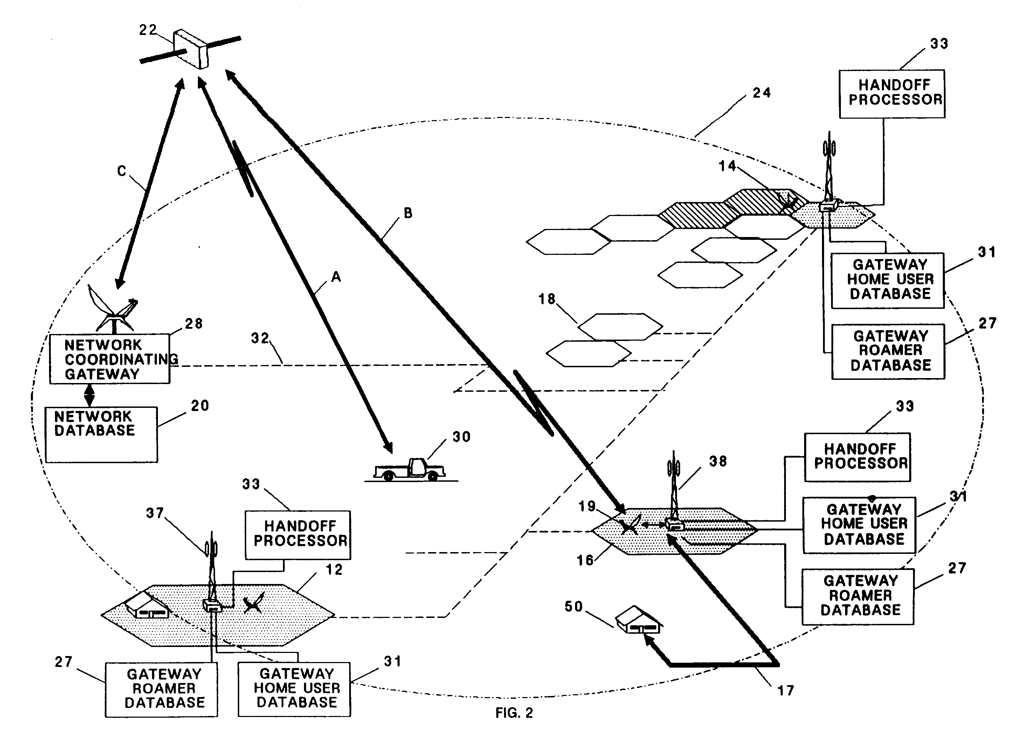

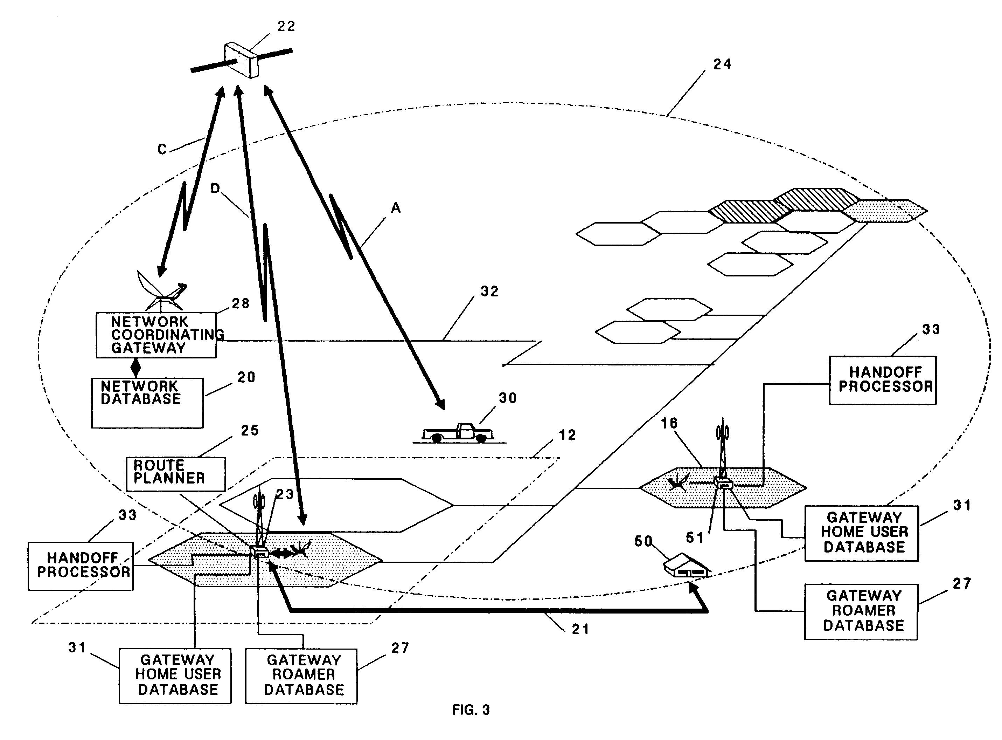

Operation of the system according to the invention is first described in connection with Fig. 2 and Fig. 3 as follows:
Notification is a first procedure. Each user has a home gateway (HG). Each gateway has a home user database which contains information of all the users for which that gateway is home and each gateway has a roamer database of all the active roamers in the gateway's service area. The roaming user 30 notifies the system either by a special control signal to the present satellite system 22 as shown in Fig. 2 by a relay path A-C to a network coordinating gateway (NCG) 28 or if in service area range by a special control signal to the nearest service area base station 37, that the user 30 desires to be placed in the database 27 of roaming users for service area 16 and that the user will be exiting service area of the terrestrial system. The special control signal which is communicated to the NCG 28 is processed either by the service area or the NCG and routed outward from the NCG 28 to the packet switched network 32. The network database 20 is updated to include the user 30 as a roamer in service area 16. The NCG 28 notes the acceptability of the user 30, and the network database 20 is updated to show the user 30 roaming in the SSA 24. The roamer database 27 of service area 16 is then updated to show the user 30 to be in the Satellite Service Area (SSA) 24 and the user's home gateway database is updated to show that the user is roaming in service area 16. This condition exists until the user 30 re-enters a service area of the terrestrial cellular system or until the user enters a different service area.

There are two kinds of telephone calls: incoming (inbound) to the terrestrial network from the (roaming) user 30; and outgoing (outbound) to the user from the terrestrial network.

Incoming calls initiated by the user 30, not located in a gateway terrestrial service area, begins with a request to the NCG 28 to access to the public switched telephone network (PSTN). The NCG 28 processes the request and checks its database 20 for the user 30. Depending on ephemeris, satellite resources, gateway resources and call destination, the call is accepted by the NCG 28 to be serviced by a specific GTSA. The GTSA that is chosen is called the Active Gateway (AG). The AG could be a user's HG or any remote GTSA, MSA or RSA. If accepted, call routing and database information are processed to route the call to the desired GTSA (the AG). The call may be directed to the user's home service area 12 or to any other location within the satellite service area. The call is set up for example as shown in Fig. 2 via path A-B, under database control of the NCG and the selected GTSA 16. The remote GTSA 16 (the AG) then acknowledges the request and processes the call to the call destination through a public switched circuit 17. Channels and/or codes are assigned by the NCG 28 and the gateway roamer database 27 at the AG is updated to show that the user equipment is busy. A handoff processor 33 at the AG 16 is updated to enable handoff from one satellite to another if required. The AG 16 notifies the NCG 28, via the packet switched network 32, that the call is in process to allow the NCG 28 to note in its database 20 that the user 30 is busy, and thereafter home user database 31 of the user's HG is updated to show the user as busy and to show the user's AG. Subsequent to call setup the user 30 and the call destination 50 are connected via two-way wireless (cellular) telephone communications links A-B, as shown in Fig. 2. These communications may be carried out using spread spectrum modulation techniques and Code Division Multiple Access (CDMA) channels, or other modulation compatible with the satellite system, using equipment located at the user 30 position, and equipment located at the remote GTSA in the satellite service area (SSA). The CDMA or other modulation signal is converted to a voice signal at both the user and the remote GTSA. At the user end, the signal is converted either to an analog signal for voice and sent to a loudspeaker or converted to a digital signal and sent to another device for further processing of data. At the remote GTSA end 38 the signal is converted to either a voice signal or digital data and sent via a PSTN switch (not shown) for further routing via the public switched telephone network 17 to the call destination 50. After communications is ended, a signal from either end of an "on-hook" condition signifies end of communication.

The call termination processes proceed as follows:
The AG 16 notifies the NCG 28 of call termination, and the network database 20 is notified of call termination and billing information and is updated to show the user 30 not busy. The AG updates its roamer database 27 and resets handoff processor 33. The NCG 28 notifies the user's HG via packet network 32 of user not busy. The HG updates the home user database 31 to show user not busy.

Consider the situation where a remote location called the "caller" desires to make a telephone call to a cellular telephone user 30 that is roaming and is not located in a terrestrial cellular telephone service area (TCTSA). The call is initiated as shown in Fig. 3. The caller 50 uses the PSTN 21 to call the user's wireless (cellular) telephone number at the user's HG 12 or perhaps some other equivalent location. The call is transferred by the PSTN switch to the user's HG. The HG equipment 23 processes the call and, by accessing the home user database 31, finds that the user 30 is roaming in the satellite service area 24 and thereby knows to route the call to the AG. The HG equipment 23 then routes a request for route planning to the route planner 25. The route planner 25 routes the call to the AG. In this example, the AG is the HG so no more call routing is required. If the home GTSA 12 is selected, the home GTSA 12 makes a call setup notification to the NCG 28 via packet network 32. The NCG 28, upon receiving the request signal, checks the network database 20, processes the information, and based on the information in its database 20, satellite resources and AG resources accepts or rejects the call. If the AG is another GTSA (not the user's HG), such as equipment 16, to handle the call, the HG 12 requests a call setup to the NCG 28 via the packet network 32. The NCG 28 hails the user and transmits call setup information via the satellite 22. The NCG 28 signals the GTSA 16 of an outbound call and with information regarding call setup via the packet network 32. The NCG 28 notifies the HG 12 to route the call to the GTSA 16 and to update its home user database 31 to show the user is busy. The call setup is as described above for the home GTSA.

If it accepts a call for connection, the NCG 28 sets up the call. The NCG 28 transmits the GTSA request for access to the user 30 through satellite 22. If accepted by the user 30, an acknowledgment is transmitted to the NCG 28 through satellite 22. The NCG 28 updates the network database 20 to show the user 30 to be busy. The NCG assigns channels and notifies the AG and the user to continue call setup. Subsequent to call setup, the user and the call destination are connected via two-way wireless telephone communications links via path A-D, as shown in Fig. 3. The AG notifies the NCG that the call is in progress and the NCG updates the network database 20. The NCG notifies the HG that the call is in progress and the HG updates its home user database 31 to show the user busy. As before, the communications are carried out over Code Division Multiple Access (CDMA), or other compatible modulation, channels using equipment located at the user position, and equipment located at the remote GTSA in the satellite service area. After communications is ended, a signal from either end of an "on-hook" condition signifies end of communication. After communications is ended a signal from either end of an "on-hook" condition signifies end of communication.

The user at some point may decide to either terminate roaming in the SSA 24 or may re-enter a GTSA. If the user 30 desires to terminate roaming in the SSA 24 he has two options: First, the user 30 may put his equipment on standby, thereby causing his equipment to not respond. This has the effect of temporarily making the user 30 unavailable for taking outbound calls to him. Alternatively, the user 30 may remove his identifying codes from the network database 20 of SSA roamers. To effect the removal from the database 20, the user 30 must notify the database 20, typically via the satellite 22 of intent to discontinue roaming in the SSA. The NCG 28 receives the user intention, and the network database 20 is updated to show the user 30 as not roaming in the SSA. The NCG 28 notifies the AG to delete the user from its roamer database 27 and notifies the HG to update its home user database to show that the user is no longer roaming in the SSA.

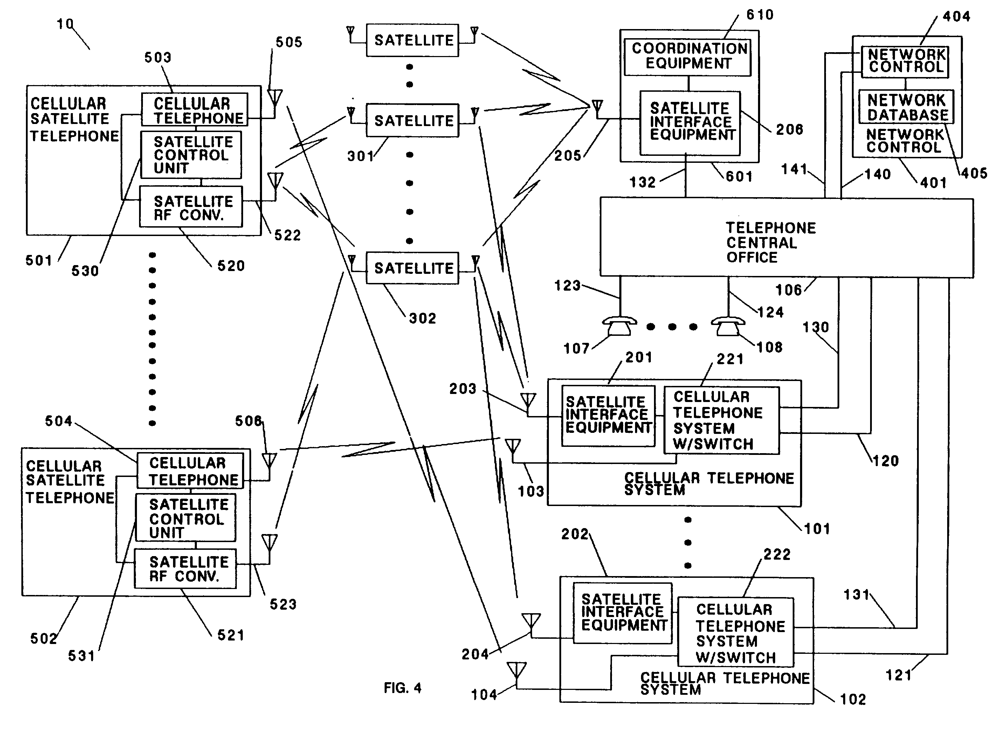

In Fig. 4 there is illustrated the principal control elements in a cellular telephone system 10 for providing voice, data and other electronic telephone services to portable and mobile telephones located anywhere in a large geographical area. Terrestrial cellular telephone systems (TCTSs) 101,102 are provided with first antennas 103,104 located at many base sites throughout a geographical area to be served (SSA 24, Fig. 1). The TCTSs 101,102 are connected to a telephone central office (TCO) 106 with voice (and data) landlines 120,121 and with signaling network (packet) land lines 130, 131. The TCTS 101,102 may be any commercially available cellular telephone system or other gateway equipment (e.g., private systems). The TCTS 101,102 may be equipped with satellite interface equipment (SIEs) 201,202. The SIEs 201,202 have second antennas 203,204 that have the purpose of transmitting signals to and receiving signals from the satellites 301,302.

A network coordinating gateway (NCG) 601 is a like a TCTS without the cellular telephone switch (it can co-located with a TCTS). A NCG has satellite interface equipment 201,202,206 with at least one antenna 205. The satellite interface equipment is connected to the packet network through line 132 and interfaces with the coordination equipment 610. The TCTSs 101,102 are connected to a NCG 601 by landline 132 via the TCO 106. The NCG 601 is connected to network control (NC) 401 by landlines 140,141 via the TCP 106. The NC 401 is equipped with a network controller 404 and the network database 405.

The TCO 106 connects the NC 401 to the NCG 601 and connects the NCG 601 to the CTS 101,102. The TCO 106 also connects the TCTSs 101,102 to the call destination telephones 107,108. These telephones may be any commercially-available product that can interface to a public switched telephone system and transmit voice and/or data. Also shown in Fig. 4 are Cellular Satellite Telephones (CST) 501. The Cellular Satellite Telephones 501 are equipped with Cellular Telephones (CT) 503 and third antennas 505 which transmit to and receive signals from the TCTS 101 via first antennas 103. In addition the cellular satellite telephones are equipped with Satellite RF Units (SRFU) 520 and fourth antennas 522 which transmit to and receive signals from the satellites 301,302 (Fig. 4). The CSTs 501 include a Satellite Control Unit (SCU) 530 which provides signaling functions to the network.

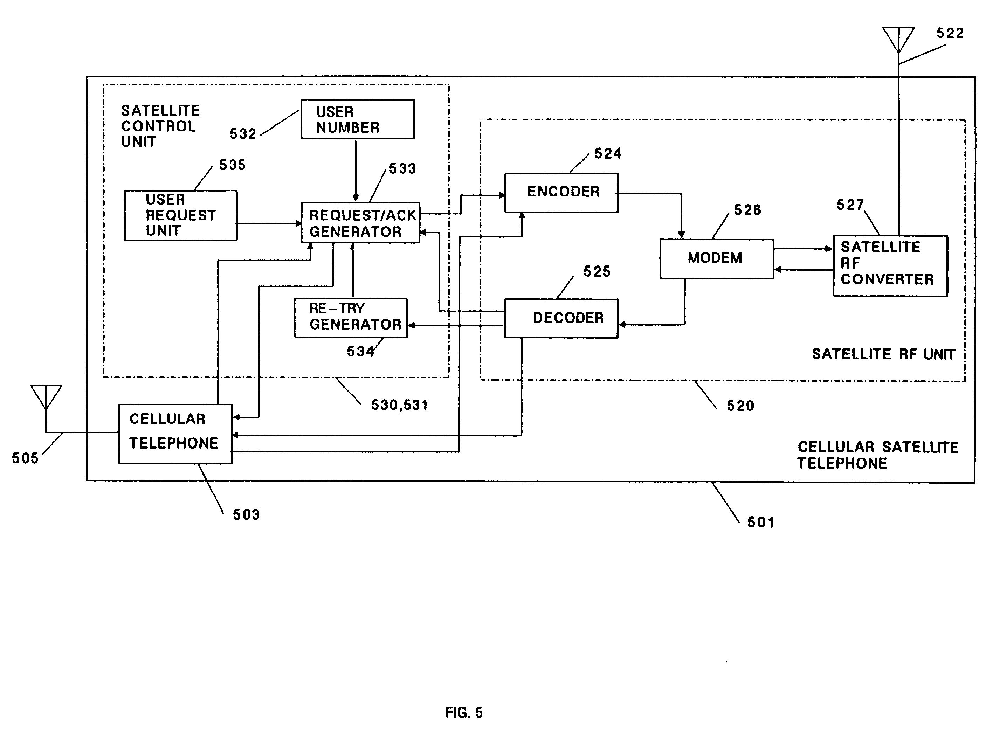

Referring to Fig. 5, there is illustrated in more detail a CST 501 of Fig. 4. The CST 501 may include a conventional cellular telephone 503 equipped with a transceiver, a handset and many options (not shown), and it is expected that the terrestrial roaming network may require digital terminals for this purpose. The cellular telephone 503 accommodates multiple telephone numbers and may be assigned a special satellite roaming number. The CST 501 is further equipped with a satellite control unit (SCU) 530 which includes storage for a user number 532, a request/ACK generator 533 and a retry generator 534. The CST 501 also includes a satellite RF Unit 520 which includes encoders 524, decoders 525, a modem 526 and a satellite RF converter 527.

When a satellite is about to lose communication between a user and a TCTSA that is handling the call, the active gateway initiates requests for a handoff to another satellite. The links to establish the handoffs are shown in Fig. 4 which shows TCT 101 handing off the links to CST 501 from satellite 302 to satellite 301.

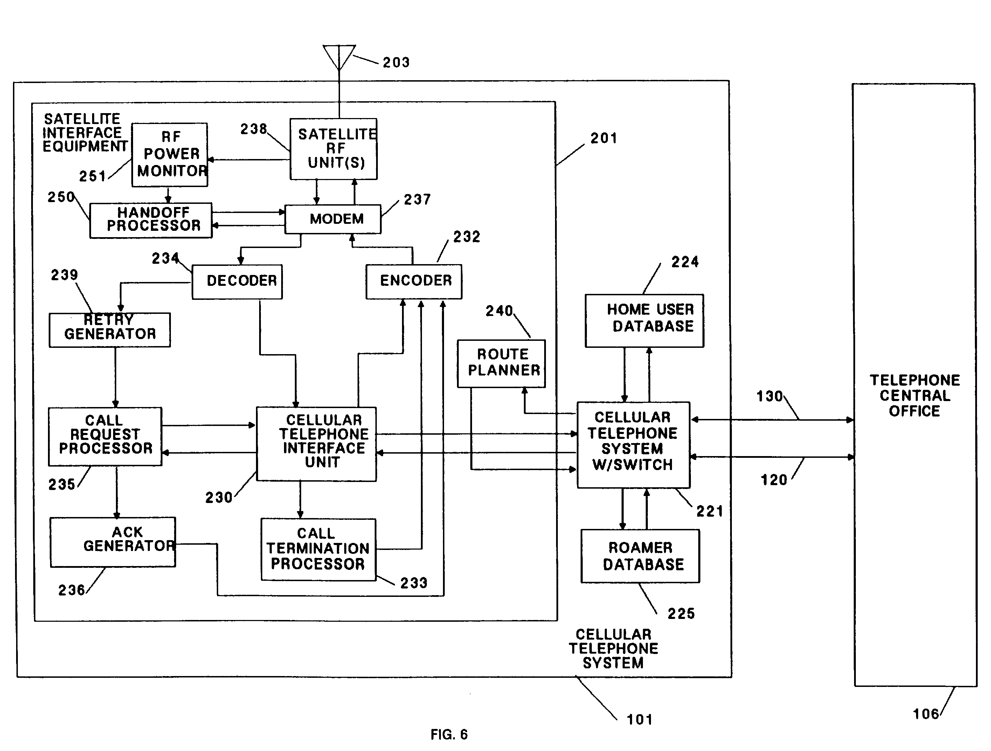

Referring to Fig. 6 there is shown in more detail a unit of the terrestrial cellular telephone system (TCTS) 101. The TCTS 101 with switch 221 may be any commercially available cellular telephone system or other gateway equipment (e.g., private systems). The TCTS 101 is interfaced to the Telephone Central Office 106 via landlines 120. The system is also interfaced by way of a signaling network (packet) to the TCO 106 by landlines 130 and there through to a network coordinating gateway 601 (Fig. 4) via landline 132.

The TCTS cellular equipment 101 also includes special equipment according to the invention for the purpose of communicating to and from the user Cellular Satellite Telephones (CTS) 501 by way of radio links through the satellite 301. This special equipment called the Satellite Interface Equipment (SIE) 201 (Fig. 6) includes a handoff processor 250, RF power monitor 251 and a Route Planner 240 which processes outbound calls to users from other callers and provides route planning to connect a caller to a user depending upon user location, the satellite ephemeris, and other planning criteria. The SIE 201 also includes a Cellular Telephone Interface Unit 230 that processes and conditions the voice and data signals and interfaces the call requests, call termination signals, and ACK data signals to the encoder 232, the Cellular Telephone System 221 and the Call Termination Processor 233. A Call Request Processor 235 takes access data from the decoder 234, via the retry generator 239, and either directs it to the Cellular Telephone Interface Unit 230 or routes it to the ACK generator 236. Signals from the ACK generator and the Call Termination Processor are applied to the encoder 232. Modem 237 modulates signals from the encoder 232 and demodulate signals from the Satellite RF Unit 238. The output from the antenna 203 is applied to the RF unit 238 to receive signals from the satellites 301. Likewise, the output of the satellite RF unit 238 is applied to the antenna 203 in order to transmit to the satellite(s). The handoff processor 250 monitors a calls signal and begin handoff procedures when a signal is below a threshold or there is a satellite that would provide better service to the user. The RF power monitor 251 checks the channel capacity of the satellite(s) in view of the gateway and informs the handoff processor 250 of channel availability.

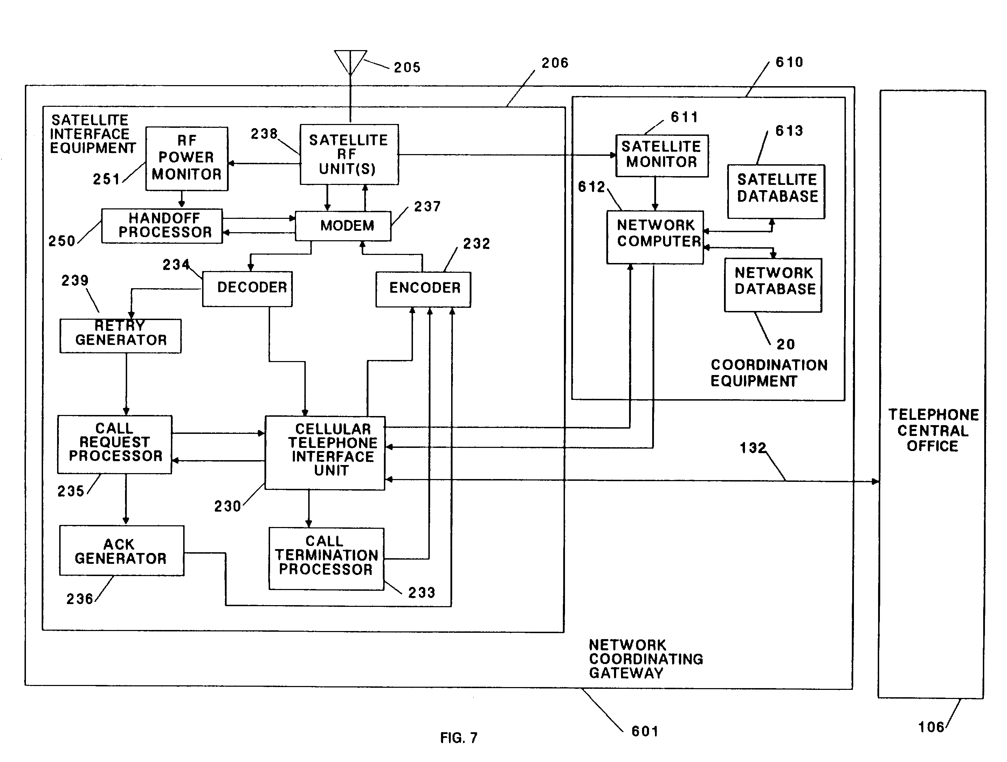

Referring to Fig. 7 there is shown in more detail the Network Coordinating Gateway (NCG) 601. The NCG 601 maybe co-located a TCTS and use the SIE 206. The difference between a regular gateway and a NCG is that a NCG comprises of commercially available equipment with the express purpose of monitoring the satellite(s), of assigning user channels, of creating and maintaining a database of cellular telephone users that are nationwide or worldwide, and of processing inbound and outbound call requests and does not necessarily have a cellular telephone switch. A NCG has at least one antenna for communication with the satellites but usually a plurality of antennas so that the NCG can be in communication with all satellites in view. This equipment may consist of computers, memory storage devices, interface equipment, modems and the like. This system may contain or be interfaced to additional databases and database management systems. The database is managed by a network computer 612 and receives and exchanges data from and with the Terrestrial Cellular Telephone Systems 101,102 by way of landline 132 connected via the TCO 106. The satellite monitor 611 monitors the satellite(s) in view of the NCG and reports on channel capacity to the network computer 612. The satellite database 620 contains information about which satellites will be in view of the NCG at what time and at what look angles. The network computer 612 uses this information to determine satellite loading and assign channels appropriately. The network computer 612 is connected to the packet network and the encoder 232 and decoder 234 through the cellular telephone interface unit (CTIU) 230. The CTIU 230 recognizes network requests such as roaming request, inbound call requests, ACK regarding network requests and discontinuance requests from users and routes those requests to the network computer 612. The CTIU 230 receives messages from the network computer 612 regarding ACK of requests from user, call setup information, calling information and hailing requests to a specific user and sends those messages to encoder 232. The network computer 612 receives from the packet network roaming requests from the TCTSA, gateway availability from gateways, ACK from gateways, user status from gateways, channel usage from gateways, billing information from gateways, system information and database information from network control, requests for channel assignments from gateways and logout requests from the TCTSA. The network computer 612 transmits through the packet network to network control of satellite capacity, billing information, database information and other system information to the TCTSA regarding login and logout requests, and to the gateways for channel requests, user activity in gateway's service area, call setup information, location of home users and other system information.

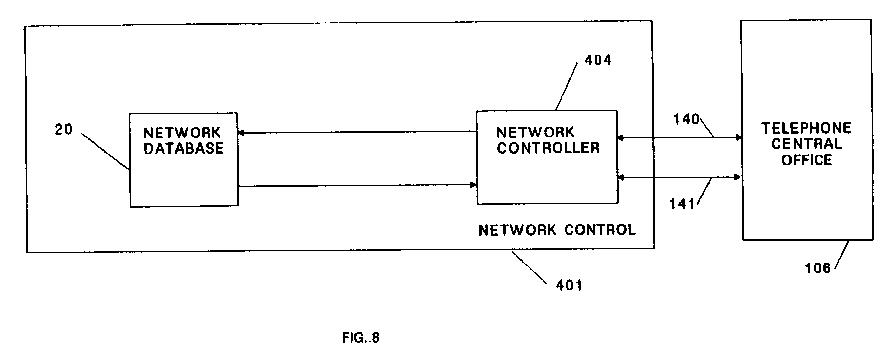

Referring to Fig. 8 there is shown in more detail the Network Control (NC) 401. The NC 401 comprises of commercially available equipment with the express purpose of creating and maintaining a database of cellular telephone users that are nationwide or worldwide, of collecting all billing and system usage information, of coordinating between NCGs and of coordinating satellite performance information that is pertinent to the system to the NCGs. This equipment may consist of computers, memory storage devices, interface equipment and the like. This system may contain or be interfaced to additional databases and database management systems. The network database 20 is managed by a network controller 404, receives and exchanges data from and with the network coordinating gateway(s) 601 by way of landlines 140,141 connected via the TCO 106, and receives and exchanges data from and with the Satellite Control Center 26.

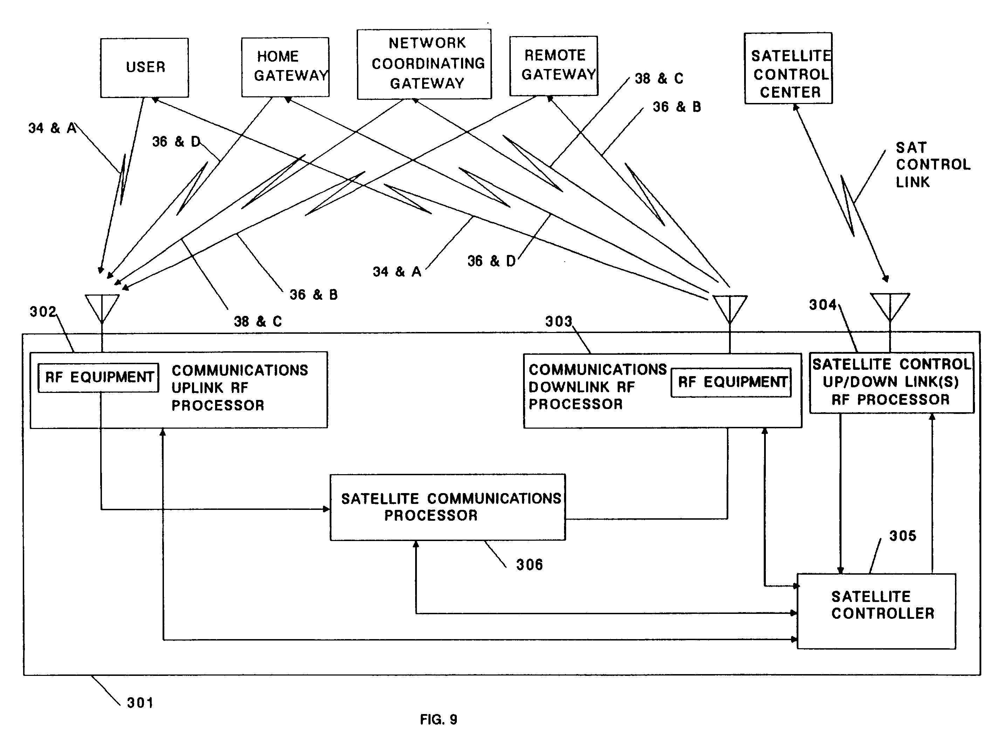

A functional block diagram of the satellite payload is shown in Fig. 9. The satellite payload comprises, respectively, Satellite Communications Processor (SCP) 306, communications uplink RF processor 312, communications downlink RF processor 303, satellite control uplink/downlink RF processor 304, satellite/payload controller 305 as well as support elements not shown.

The communications uplink RF processor 312 receives signals from transmitters on the ground by an antenna, converts the received signals to an intermediate form, and applies the signal the to SCP 306. The SCP 306 switches the signals as appropriate and applies the signals to the communications downlink RF processor 303. The communications downlink RF processor 303 converts the signals to the downlink frequency, amplifies the signal, and transmits the signals to the ground by an antenna. A separate set of satellite control links, shown as the satellite control uplink/downlink processor 608 are used for controlling the communications system, other subsystems, and maintaining the satellite operation software. The uplink signals to the satellite are down converted to a baseband signal and applied to the satellite controller 305. The satellite controller decodes the control messages and performs the appropriate actions. Digital signals from other portions of the satellite, databases, buffers, storage, and satellite operation software are applied to the satellite controller 305. The satellite controller 305 encodes these signals and sends the signals to the satellite control uplink/downlink processor 608 for conversion to RF and transmission to the ground.

It is useful to understand the operation of the system by users and callers. A user (30) is defined to be an operator who is equipped with a device capable of requesting access, making and receiving calls with equipment 501,502 shown in Fig. 4 via satellites 301,302, cellular telephone system equipment 101,102, terrestrial lines or other means 120,121 and telephone central office or other central switching means 106, and terrestrial lines or other means 123,124 to callers 107,108. A caller is defined to be an operator who is equipped with a device capable of requesting access, making and receiving calls with equipment 107,108 via terrestrial lines or other means 123,124, and telephone central office or other switching 106, and terrestrial lines or other means 120,121 and cellular telephone system equipment 101,102, and via satellites 301,302 to the user 30 equipped with equipment 501,502.

The following description details the method of operation of the system for carrying out several processes. These processes are;
#1 Establishing a user as a roamer in the SSA
   #1A Request for roaming by user in SSA
   #1B Request for roaming by user in a TCTSA
#2 Call initiation by a User (an Inbound Call)
   #2A Call request (Inbound)
   #2B NCG acceptance of calls from user
   #2C Inbound call setup process, AG acceptance
   #2D Inbound call acceptance retry notice
   #2E Inbound call duplex operation
   #2F Handoff of inbound and outbound calls
   #2G Call termination of inbound and outbound calls
#3 Call initiation by a Caller (an Outbound Call)
   #3A Call request (Outbound)
   #3B NCG acceptance of calls from caller(Outbound)
   #3C Outbound call setup process, AG acceptance
   #3D Outbound call duplex operation
   #3E Handoff of Outbound calls
   #3F Call termination (Outbound call)
#4 Notification to discontinue roaming by User
   #4A Request to discontinue roaming by user in SSA
   #4B Request to discontinue roaming by user in a TCTSA

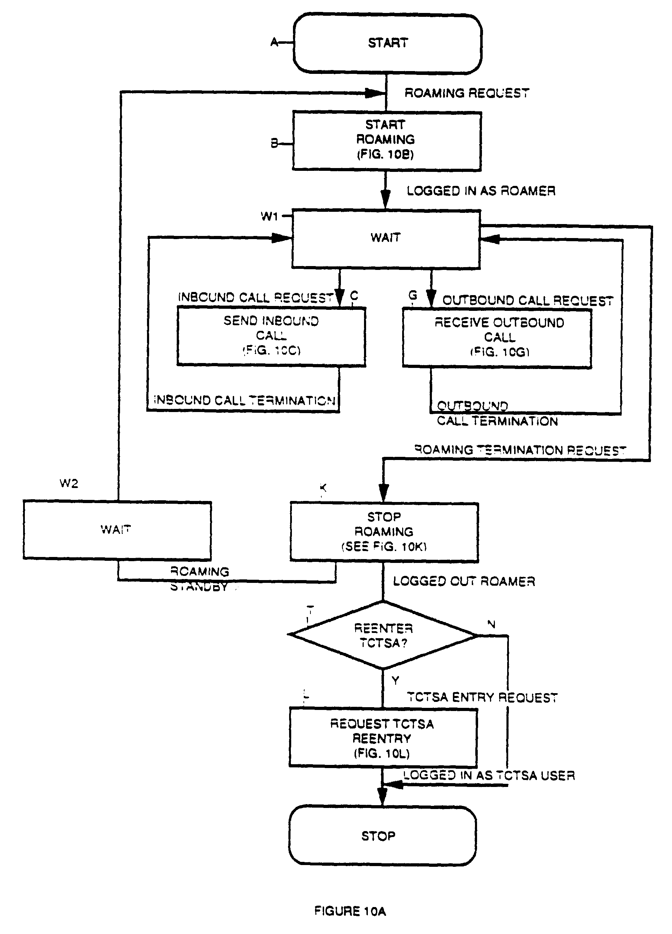

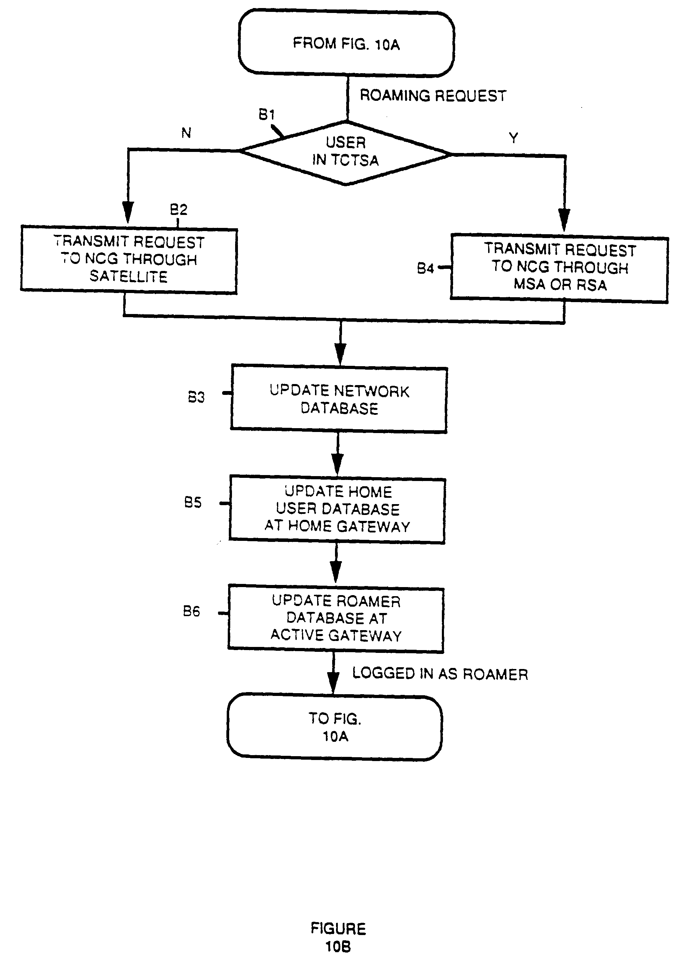

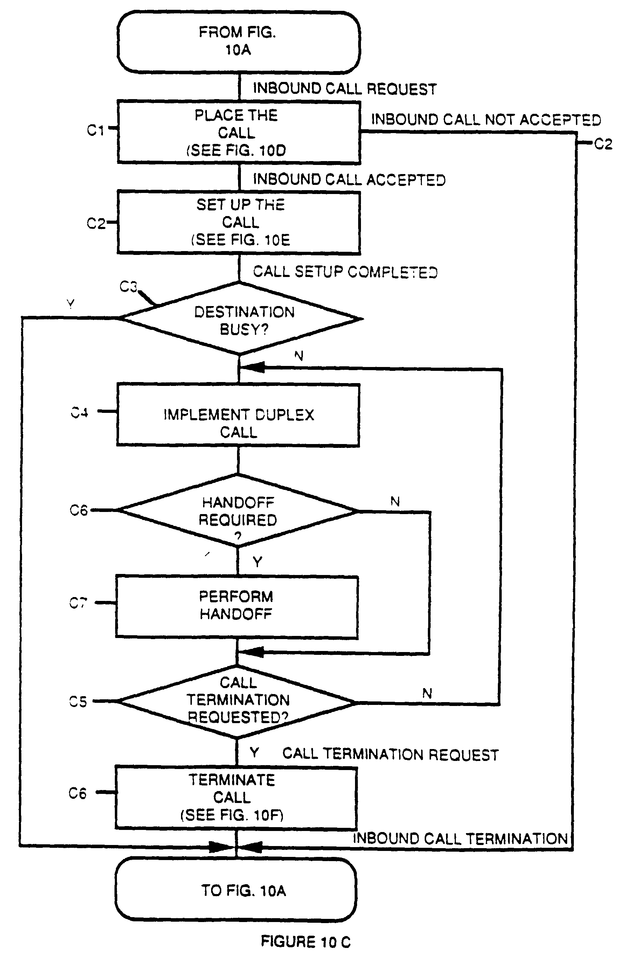

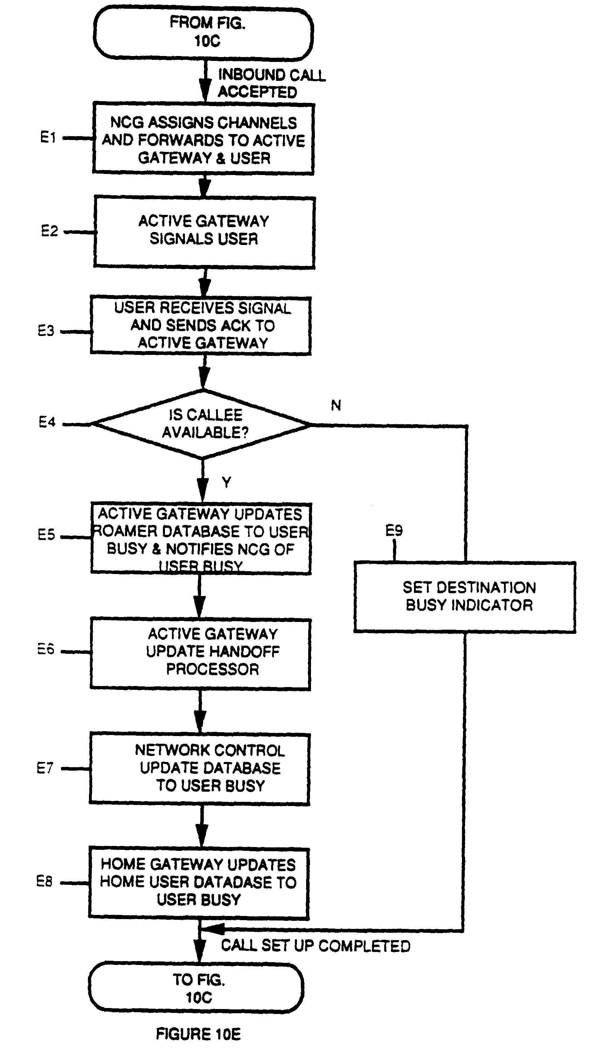

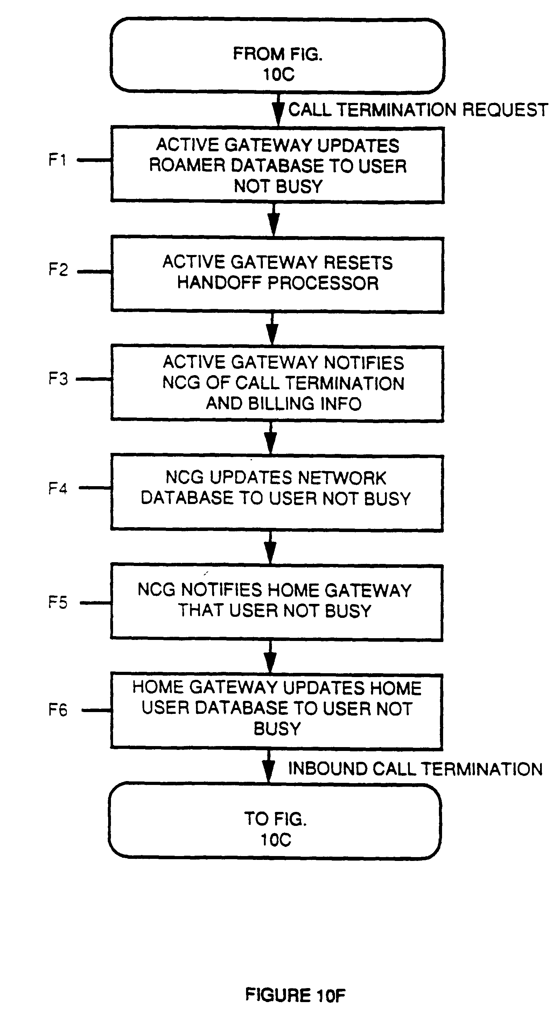

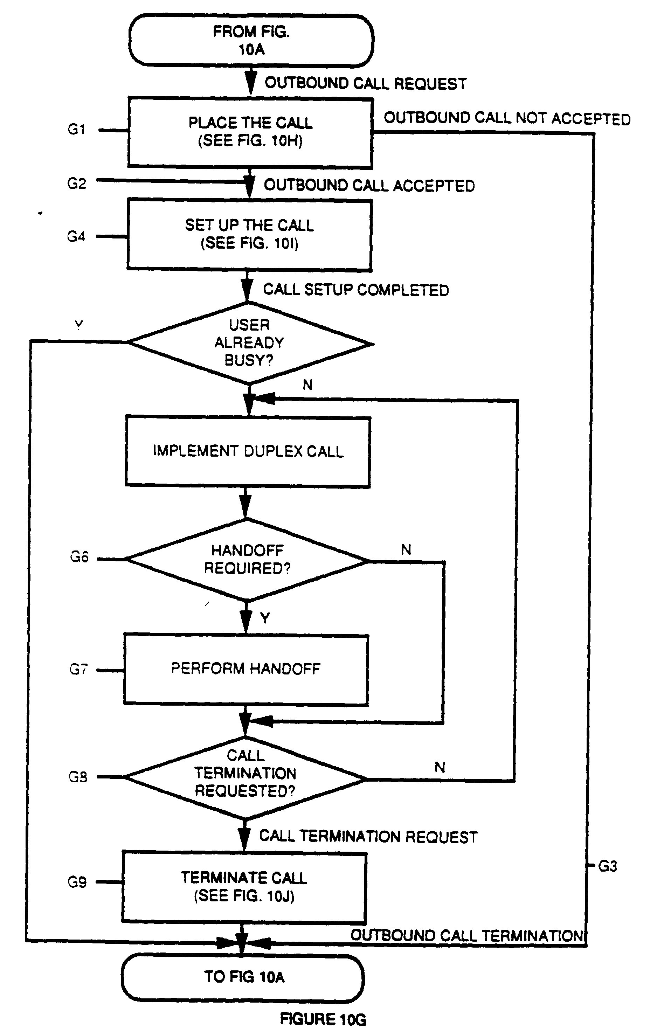

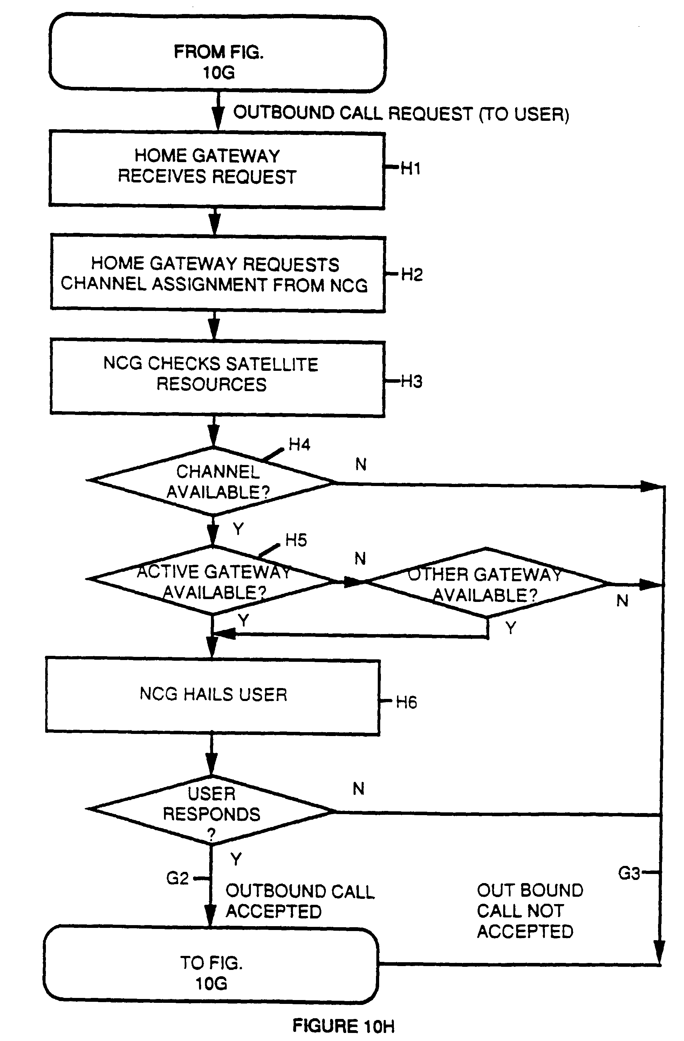

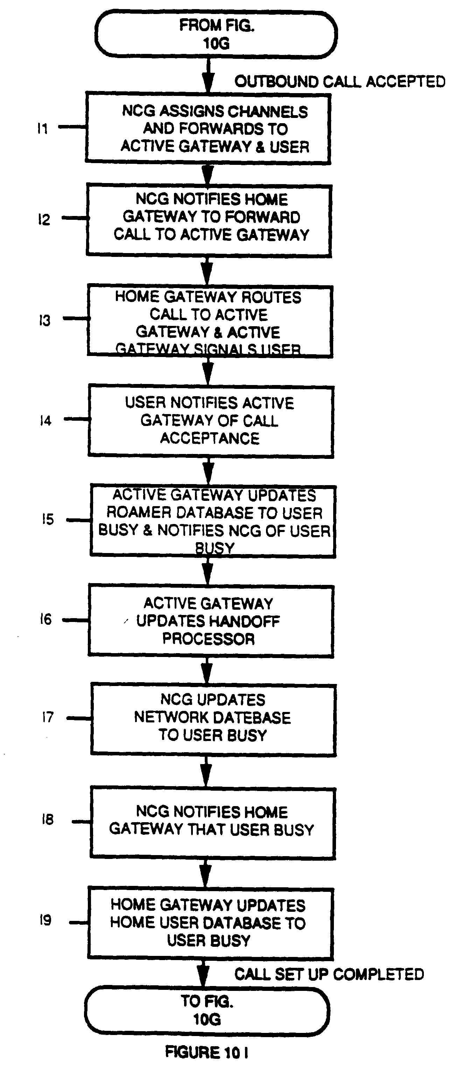

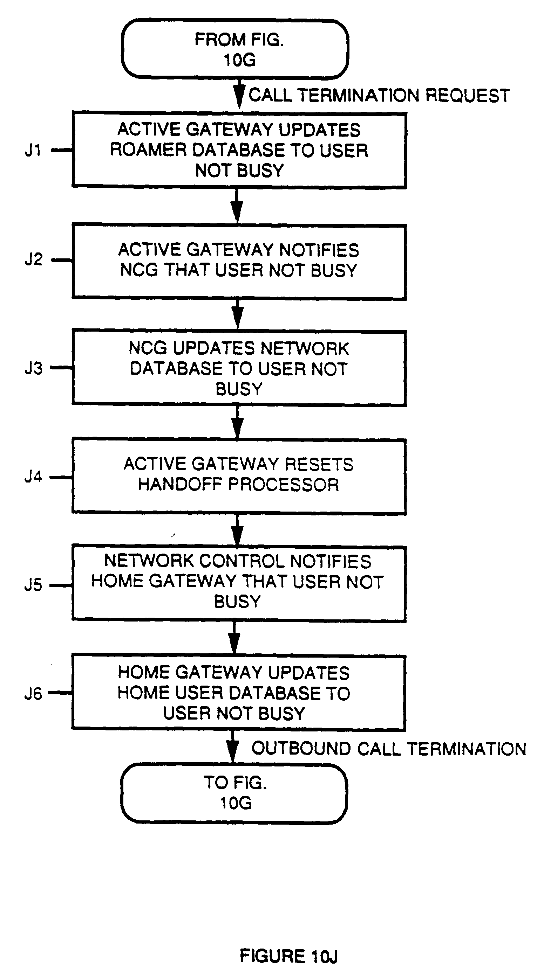

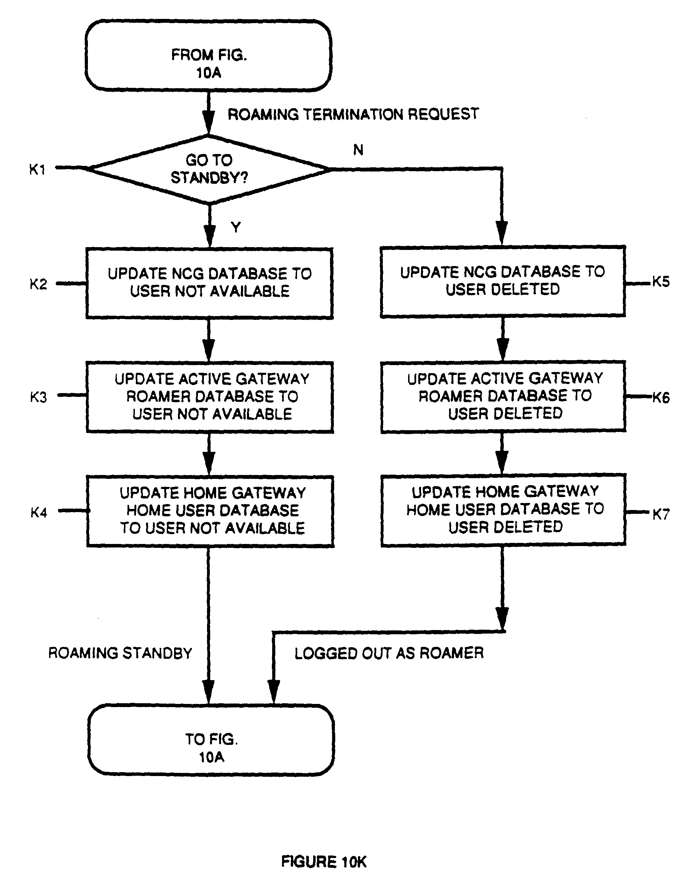

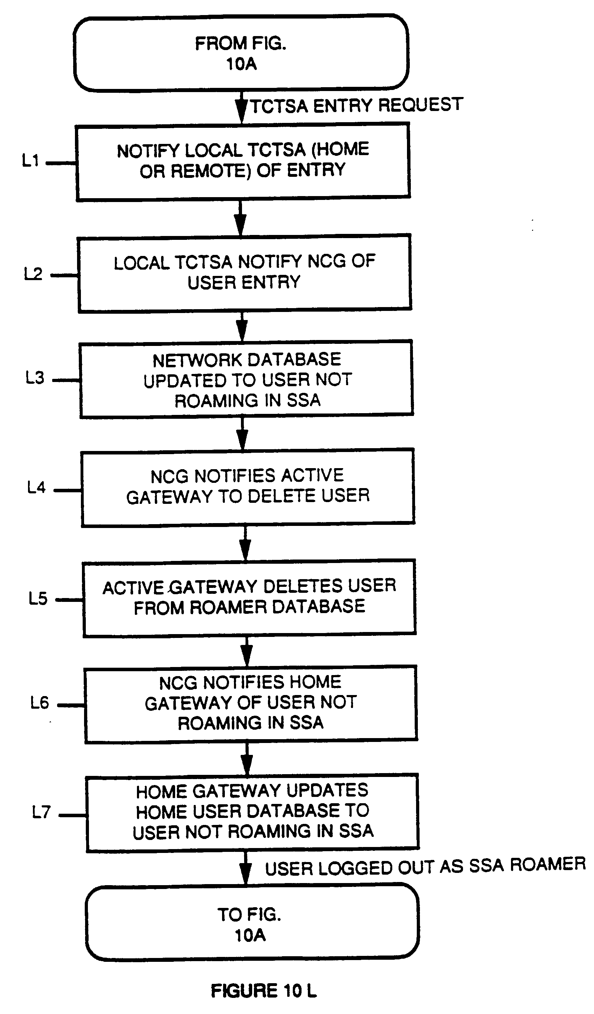

These processes and their sub-processes as explained hereinafter are outlined in a flow chart shown in Figs. 10A through 10L.

### ESTABLISHING A USER AS A ROAMER IN THE SSA

Consider a user wishing to be established as a roamer. The user must establish that he is a authorized user to have access to the communications facility (Fig. 4; Fig. 10A, Step B, Fig. 10B). The user has two options; he may notify Network Coordinating Gateway (NCG) of his intention while in the SSA and out of range of a TCTSA and have his request processed via a satellite relay to the NCG (Fig. 10B, Steps B1, B2, B3); or he may make his request via a participating TCTSA (Steps B1, B4, B3). These two cases are now described:

### REQUEST FOR ROAMING BY USER IN SSA

Referring to Fig. 2, a method of a user signaling the NCG 28 that he wishes to roam can be illustrated. In this case the potential roamer is located in the SSA and not in a TCTSA. The user, operating the Wireless Satellite Telephone (WST) 501,502, either manually or automatically actuates the User request Unit 535 (Fig. 5) which activates the Request/ACK generator 533 and formats a preset user number 532 onto a data stream that includes a manually or automatically-entered user location code and passes it to the encoder 524. The encoder 524 processes the datastream into a signal and routes it to the modem 526 for modulating the signal, which passes it to the Satellite RF Converter 527, which then activates the satellite antenna 522,523 and causes an RF signal to emanate from the device.

The user transmits data to the NCG 28 through the satellite 22. The data includes user identification number, location code and a request for roaming. This signal is transmitted via link "A" in Fig. 9 to the satellite. The signal is received by the communications uplink RF processor 312 which converts the signal, applied the signal to the SCP 306 which processes the signal, applied to the communications downlink RF processor 303 which converts, amplifies, and transmits the signal to the ground by an antenna. The satellite transmits the signal via link "C" to the NCG. The signals are received by the NCG equipment 601 (Fig. 7) by antenna 205 and applied to the satellite RF unit(s) 238. After processing the signal is applies to the modem 237 for demodulation and thence to the decoder 234. After decoding, the signal is applied to the cellular telephone interface unit 230 which recognizes the data as a login request and passes the data to the network computer 612. The network computer 612 sends an ACK signal on a preset frequency to the user by sending a signal to the cellular telephone interface unit 230 which signals the call request processor 235. The call request processor 235 signals the ACK generator 236 to signal the user through the satellite that it has received the roaming request. This ACK signal is applied to the encoder 232 and the modem 237 and passed to the satellite RF unit(s) 238 and after processing applied to the antenna 205 for transmitting to the satellite. Referring to Fig 9, the ACK signal is transmitted over link "C", 38 to the satellite. The signal is received by the satellite and transmitted over link "A", 34 to the user. Referring to Fig. 5, the signal is received by the user satellite telephone by its antenna 522,523 and applied to the user's satellite RF converter 527. The resulting signal is passed to the modem 526 and after demodulation is decoded by the decoder 525. The resulting signal is sent to the request/ACK generator 533 which shifts the cellular telephone 503 to stand-by.

The network computer 612 also selects the active gateway (AG) that is going to be used based on user location or other criteria given by the system. The network computer 612 then verifies the user as acceptable for authorization to use the system. If the user is not acceptable for authorization to use the system, the network computer 612 does not update the network database 20 and ignores the user request. Upon acceptability of the user as an authorized user the network computer 612 updates the network database 20 to show user active, user location, and the selected AG. The computer interrogates the network database for the user's home gateway (HG). The network computer 612 sends the user ID along with user location and the selected AG to the user's HG 101 via the packet network through landlines 132. The data is received by the HG 101 by the cellular telephone system 221 through landlines 130. The cellular telephone system 221 updates the home user database 224 to show the user as roaming, the user's location and AG. The network computer 612 then sends call setup data to the user through the selected satellite which might include call setup transmit and receive channels, transmit and receive codes if CDMA is used and other information by formatting a message which contains the data and sending it to the cellular telephone interface unit 230 which applies the signal to the encoder 232 and the modem 237 and passed to the satellite RF unit(s) 238 and after processing applied to the antenna 205 for transmitting to the satellite. Referring to Figs. 4 and 9, the ACK signal is transmitted over link "C", 38 to the satellite. The signal is received by the satellite and transmitted over link "A", 34 to the user.

Referring to Fig. 5, the signal is received by the user satellite telephone by its antenna 522,523 and applied to the user's satellite RF converter 527. The resulting signal is passed to the modem 526 and after demodulation is decoded by the decoder 525. The resulting signal is sent to the request/ACK generator 533 which shifts the cellular telephone 503 to the proper channel for non-CDMA operation or provides the modem 526 with the call CDMA codes for reception and goes to ready.

The network computer 612 sends user ID, user location and the call setup information to the AG which might include call setup transmit and receive channels, transmit and receive codes if CDMA is used and other information by formatting a message which contains the data and sending it to the cellular telephone interface unit (CTIU) 230 which routes the data to the packet switch network through landlines 132. The data is received by the AG 102 by the cellular telephone system 222 through landlines 131. The cellular telephone system 222 updates the roamer database 225 to show the user as roaming, the user's location and call setup information.

### REQUEST FOR ROAMING BY A USER IN A TCTSA

The second method of requesting roaming in an SSA is to make the request while in a TCTSA. The user either manually or automatically activates his Wireless Satellite Telephone (WST) User Request Unit 535 (Fig. 5). A signal, including the user number, location, and codes to indicate the user wishes to roam in the SSA, is sent to the Cellular Telephone System (CTS) 101(102) by antenna 505(506) (Fig. 4; Fig. 10B, Step B4). The CTS 101 formats a data signal which is conveyed via landline 130 to the TCO 106 and then to the NCG 601 via landline 132. Referring to Fig. 7, the signal is then applied to the network computer 612 which updates the network database 20 and interrogates the database to verify the user as acceptable for authorization to user the system. The network computer 612 then verifies the user as acceptable for authorization to use the system. If the user is not acceptable for authorization to use the system, the network database 20 is not updated and the network computer 612 sends a message to the CTS to ignore the request via the packet network through landlines 132. Upon acceptability of the user as an authorized user the computer 612 selects the active gateway AG that is going to be used and updates the network database 20 to show user active, user location and the selected AG. The network computer 612 sends this information to the active gateway via the packet network through landlines 132. The data is received by the AG 102 by the cellular telephone system 222 through landlines 131. The cellular telephone system 222 updates the roamer database 225 to show the user as roaming, the user's location and call setup information. The network computer 612 interrogates the network database for the user's home gateway (HG). The network computer 612 sends the user ID along with user location and the selected AG to the user's HG 101 via the packet network through landlines 132. The data is received by the HG 101 by the cellular telephone system 221 through landlines 130. The cellular telephone system 221 updates the home user database 224 to show the user as roaming, the user's location and AG. The network computer 612 then sends a message to the CTS to transmit to the user call setup data which might include call setup transmit and receive channels, transmit and receive codes if CDMA is used and other information. The CTS transmits this data to the user. The user receives this data and goes to ready.

### CALL INITIATION BY A USER (AN INBOUND CALL)

Referring to Fig. 5, the process to initiate a call from a user while roaming in an SSA is as follows:

### CALL REQUEST (INBOUND)

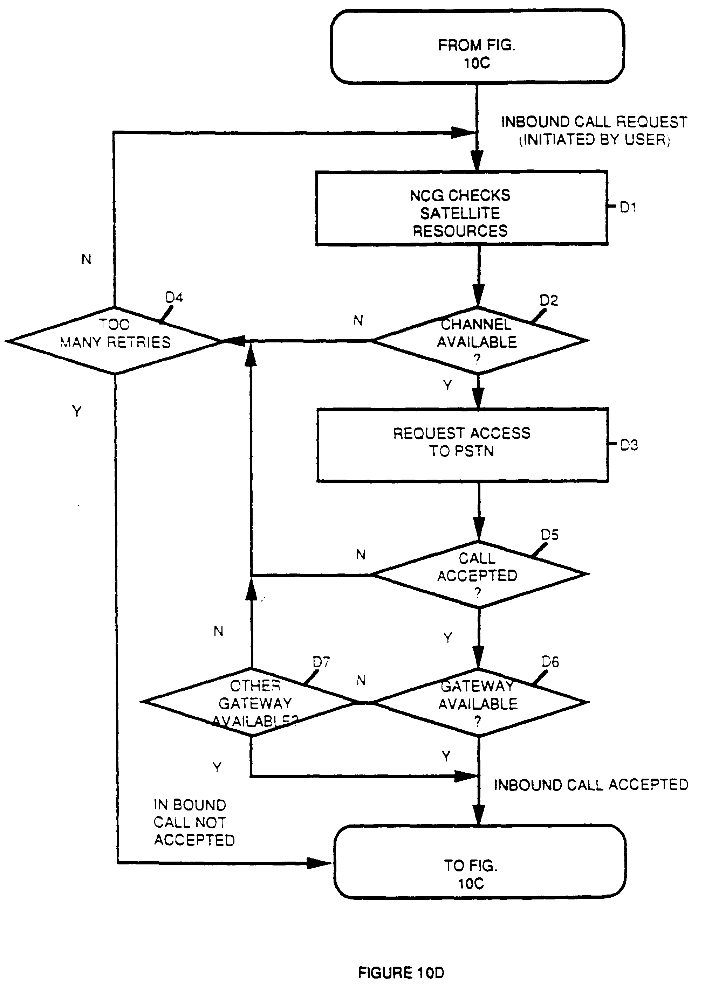

To make a call request, the user dials the destination telephone 107,108 telephone number by the use of the keypad of the Cellular Telephone 503 (See Fig. 10A, Step C, Fig. 10C, Step C1). The number is passed to the Satellite Control Unit 530,531 and into the Request/ACK generator 533. The user number 532 is added to the signal and passed to the encoder 524 and processed into a data stream which is applied to the Modem 526. Two methods are available for the user to access the satellite. Method 1: An FDM-FM or other modulation using contention multiple access, operating on a hailing channel, may be used to signal the satellite 301. Method 2: Alternatively a special identifying CDMA code placed in the User Request Unit 535. The satellite simply repeats to the ground the signals it receives so the method makes no difference to the satellite. The resulting modulated signal is then applied to the Satellite RF Converter 527 and routed to the Satellite antenna 522 and transmitted to the satellite(s) within range. The satellite(s) within range repeat the signal to the ground.

### NCG ACCEPTANCE OF CALLS FROM USER (INBOUND)

In the process of accepting calls at the NCG 601, the signals are received by antenna 205 and applied to the Satellite RF Unit 238 as shown in Fig. 7. The signals are processed, applied to the modem 237, thence the decoder 234 and the CTIU 230. The CTIU 230 sends the user ID and Call Destination to the network computer 612. The network computer 612 checks the information being fed to it by the Satellite Monitor 611 to see if there are satellite resources and if there are resources, the channels that are available. If no satellite resources are available, the network computer 612 sends a message to CTIU 230 to signal the user to retry (method described below). If satellite resources are available, the user ID is checked against the stored ID information held in the network database 20 for acceptability of the user (Fig. 10D, D3). If no access is detected the call request is terminated (Fig. 10C, C2; Fig. 10D, D5). If access is allowed (D5), the network computer 612 checks the availability of the AG by formatting a channel request and sending the request to the AG through landlines 132. The AG receives the message and responds. If the AG is not available, the network computer 612 checks the availability of other gateways that can be used. If no other gateways are available, the network computer 612 sends a message to CTIU 230 to signal the user to retry (method described below). If another gateway is available, the network computer 612 selects this gateway as the new AG because the current AG in not available or because of a system choice. The network computer 612 sends user ID and user location to new AG and to the user's HG via the packet network through landlines 132. The AG receives the information and updates its roamer database and the HG receives the information and updates its home user database.

### INBOUND CALL SETUP PROCESS/AG ACCEPTANCE

If the current AG is available or a new AG was selected, the network computer 612 sends user ID, destination number, current satellite being used, transmit and receive frequencies and transmit and receive codes if CDMA is being used to the AG via the packet network through landlines 132. The data is received by the AG 102 by the cellular telephone system 222 through landlines 131. The cellular telephone system 222 updates the roamer database 225 to show the call information and the destination number. The cellular telephone system 222 sends the information to the CTIU 230 which sets transmit and receive frequencies, sets transmit and receive codes if CDMA is being used. The network computer 612 also sends the call information to the user by the same method as call setup as described in the request for SSA roaming. The user receives call information, sets transmit and receive frequencies, sets transmit and receive codes if CDMA is being used and goes to stand-by. The cellular telephone interface unit 230 at the AG processes the call and applies the desired destination number to the cellular telephone system w/switch 221. The CTIU 230 at the AG generates ACK codes for the call request processor and destination code signals for the cellular telephone system with its switch 221. Referring first to the ACK codes, the call request processor signals the ACK generator 236 to signal the user and the user that it is ready to place the call. This ACK signal is applied to the encoder 232 and the modem 237 and passed to the satellite RF unit(s) 238 and after processing applied to the antenna 203,204 for transmitting to the satellite. Referring to Figs. 4 and 8, the ACK signal is transmitted over link "D", 36 or link "B", 36 depending on whether the gateway is the home gateway or a remote gateway. The satellite relays the signal over link "A", 34 to the user.

Referring to Fig. 5, the signal is received by the user satellite telephone by its antenna 522,523 and applied to the user's satellite RF converter 527. The resulting signal is passed to the modem 526 and after demodulation is decoded by the decoder 525. The signal is sent to the request/ACK generator 533. The user and the gateway now have a duplex link.

Referring now to the destination signals sent to the cellular telephone switch, in its normal fashion the cellular telephone system w/switch 221, as shown in Fig. 4, via the terrestrial system lines 120,121, connects to the desired call destination 107,108 via the telephone central office 106. Once the call destination answers the call duplex operation begins. The CTIU 230 at the AG sends a message to the NCG 28 to update database to show call in progress by formatting a message and sending it to the CTS 221 which sends the message to the NCG 28. The data is received by the NCG 601 by the cellular telephone system 223 through landlines 132 which sends the data to the CTIU 230. The CTIU routes the message to the network computer 612 which updates the network database 20 to show that the user has a call in progress. The network computer 612 sends the user ID along with call in progress to the user's HG via the packet network through landlines 132. The data is received by the HG 101 by the cellular telephone system 221 through landlines 130. The cellular telephone system 221 updates the home user database 224 to show the user as having a call in progress. The Handoff Processor 250 is updated with the information regarding this duplex call.

### INBOUND CALL ACCEPTANCE RETRY NOTICE (CALL NOT ACCEPTED)

If the call is not accepted (Fig. 10C, Steps C1, C2), the network computer 612 generates codes indicating NOT OK - RETRY and formats a signal to the user to show that the call must be retried, formats a message and sends it to the CTIU 230 which passes the data to the encoder 232. The encoded signal is applied to the modem 237 for modulation, applied to the Satellite RF Unit 238 and after processing applied to the antenna 203,204 for transmitting to the satellite. Referring to Figs. 4 and 9, the NOT OK - RETRY signal is transmitted over link "C", 38. The satellite relays the signal over link "A", 34 to the user.

Referring to Fig. 5, the retry signal is received by the user's satellite antenna 522,523 and passed to the user's Satellite RF Unit 527. The resulting datastream is demodulated by the Modem 526 and passed to the decoder 525. The decoded retry signal is applied to the Retry Generator 534. When, after a prescribed time delay, the comparator in the Retry Generator 534 shows positive it signals the call request generator to retry. A counter will limit the number of retries.

### INBOUND CALL DUPLEX PROCESS

Reference is made to Figs. 4 and 9 for signal routing and satellite operation, to Fig. 5 for user equipment operation and to Fig. 6 for gateway operation.

### USER TO CALL DESTINATION DIRECTION

Referring to Fig. 5 to consider the user's end of a duplex call, the user communicates to the call destination 107,108 by activating the Cellular Telephone 503 which passes digital voice or data to the encoder 524, which encodes the signal into a datastream, which is passed to the Modem 526. The Modem modulates the signal and passes it to the Satellite RF Converter 527 for transmission to the satellite by the antenna 522,523.

This signal from the user is transmitted via link "A" in Fig. 9 to the satellite. The signal is received by the communications uplink RF processor 312 which converts the signal, applied the signal to the SCP 306 which processes the signal, applied to the communications downlink RF processor 303 which converts, amplifies, and transmits the signal to the ground by an antenna. The satellite transmits the signal via link "B" 36, or "D" 36, depending on the gateway selected in the call setup process.

Referring to Fig. 6, the signals are received by the MSA/RSA equipment 101,102 by antenna 203,204 and applied to the satellite RF unit(s) 238. After processing the signal is applied to the modem 237 and thence to the decoder 234 if necessary. (If the user equipment generates data that conforms to industry standards, the decoding step may be bypassed.) After decoding, the signal is applied to the cellular telephone interface unit 230 and thence to the Cellular Telephone System w/switch 221. The system then applies the signal to the terrestrial interface 120,121 via the telephone central office 106 and thence to the call destination device 107,108 (Fig. 4).

### CALL DESTINATION TO USER DIRECTION

In a similar manner the signals from the call destination 107,108 are processed. Referring to Fig. 4, the call destination user activates his Telephone Device 107,108 which passes his voice or data over landlines 123,124 to the Telephone Central Office (TCO) 106. According to the invention, these signals are routed to the selected MSA/RSA Cellular Telephone System 101,102 by landlines 120,121. The landline system is not bypassed. Referring to Fig. 6, the Cellular Telephone System 221 routes the signals to the Cellular Telephone Interface Unit 230 where the signals are processed and fed to the encoder 232. After encoding, the signals are applied to the Modem 237 and after modulation are sent to the Satellite RF Unit 238. The resulting RF signal is sent to the antenna 203,204 for transmission to the Satellite 301,302 (Fig. 4).

This signal from the gateway is transmitted via link "B" 36, or "D" 36, depending on the gateway selected in the call setup process, in Fig. 9 to the satellite. The signal is received by the communications uplink RF processor 312 which converts the signal, applied the signal to the SCP 306 which processes the signal, applied to the communications downlink RF processor 303 which converts, amplifies, and transmits the signal to the ground by an antenna. The satellite transmits the signal via link "A", 34 to the user.

Referring to Fig. 5, the user receives communications in the following manner: The signals are received by the antenna 522 and sent to the Satellite RF converter 527, then passed to the modem 526. The demodulated baseband signals are then decoded by the decoder 525 and sent to the cellular telephone 503,504 for further processing into audio or data.

### HANDOFF OF INBOUND AND OUTBOUND CALLS

The handoff of both inbound and outbound calls is accomplished by the same means. The handoff processor 250 senses user signal level below a preset level over a prescribed length of time or a handoff is required given the satellites in view of the AG. Subsequent handoffs are accomplished in the same manner with the second satellite becoming the original satellite and a third satellite becoming the new satellite, and so on.

The handoff processor 250 signals the modem 237 to search the other satellites in view for the user. If the user is not found on the other satellites, the handoff processor 250 is reset and after a prescribed length of time the signal level will be checked to see if the hand-off procedure should start again. If the user is found on another satellite, the handoff processor 250 checks the input from the RF power monitor 251 if channel capacity is acceptable. If not acceptable, the handoff processor 250 picks an acceptable channel frequency and new CMDA codes if required. The handoff processor formats a message containing the new transmit and receive frequencies (and new codes if required) and sends the message to the modem 237 for modulation. The Modem 237 modulates the message and applies signal to the Satellite RF Unit 238. The resulting RF signal is sent to the antenna 203,204 for transmission to the original Satellite 301 (Fig. 4).

Referring to Fig. 9, the signals are transmitted from the gateway over link "D", 36 or link "B", 36 depending on the gateway selected during the call setup process. The signals are downlinked to the user via link "A", 34.

Referring to Fig. 5, the user receives communications in the following manner: The signals are received by the antenna 522 and sent to the Satellite RF converter 527, then passed to the modem 526. The demodulated baseband signals are then decoded by the decoder 525. The resulting signal is sent to the request/ACK generator 533 which shifts the cellular telephone 503 to the proper channel and provides the modem 526 with the call CDMA codes for reception and goes to ready. The request/ACK generator 533 sends an ACK to the handoff processor 250 at the AG through the satellite. The handoff processor 250 receives the ACK and shifts satellite RF unit 238 to new transmit and receive frequencies. The handoff processor 250 signals the satellite RF unit 238 to send its transmissions and receptions to the new satellite and the call continues.

If there was adequate channel capacity on the new satellite at the original frequencies, the handoff processor 250 signals the satellite RF unit 238 to send its transmissions and receptions to the new satellite and the call continues. The handoff processor formats a message for the NCG 28 regarding the new satellite and new frequency assignment if required and sends the message to the modem 237. The modem applies the message to the decoder 234, thence to the CTIU 230, and to the packet network through landlines 130. The data is received by the NCG 601 by the CTIU 230 through landlines 132. The CTIU 230 routes the message to the network computer 612 which updates the network database 20 to show the new call information.

### CALL TERMINATION OF INBOUND AND OUTBOUND CALLS

Calls are terminated in the same manner for user initiated calls or caller generated calls (Fig. 10C to Fig. 10F or Fig. 10G to Fig. 10J) as follows: Referring to Fig. 6, the Cellular Telephone System 221 senses an on-hook condition, from either the user or the call destination, and signals the Cellular Telephone Interface Unit (CTIU) 230 to activate call termination. The CTIU signals the call termination processor 233 to generate a call termination signal and route it to the encoder 232. The encoded signal is then applied to the Modem 237, and this modulated signal is routed to the Satellite RF Unit 238. The resulting RF signal is sent to the antenna 203,204 for transmission to the Satellite 301,302 (Fig. 4).

This signal from the gateway is transmitted via link "B" 36, or "D" 36, depending on the gateway selected via the call setup process in Fig. 9 to the satellite. The signal is received by the communications uplink Rf processor 312 which converts the signal, applied the signal to the SCP 306 which processes the signal, applied to the communications downlink RF processor 303 which converts, amplifies, and transmits the signal to the ground by an antenna. The satellite transmits the signal via link "A", 34 to the user.

Referring to Fig. 5, the user receives communications in the following manner: The signal is received by the antenna 522 and sent to the Satellite RF converter 527, then passed to the modem 526. The demodulated baseband signals are then decoded by the decoder 525 and sent to the cellular telephone 503,504 which discontinues the call.

The Cellular Telephone System also activates codes which are transmitted over landlines 130 to the NCG 28. Referring to Fig. 4, these signals are routed over the network landlines 130,131 to the TCO 106 and thence to the NCG 601 by landline 132. Referring to Fig. 7, these signals are processed by the network computer 612 which updates the network database 20 to show the user not busy. Certain other business data is also routed to the NCG 601, such as billing information, call time, rates or other such information. The network computer 612 notifies the home MSA/RSA gateway 101(HG) via packet switched network 32 through landlines 132 via telephone central office 106 or other such network of the current status of the user. The data is received by the HG 101 by the cellular telephone system 221 through landlines 130. The cellular telephone system 221 updates the home user database 224 to show the user as not busy. The AG resets processors and updates databases. Referring to Fig. 6, the cellular telephone system w/switch 221 then updates the roamer database 225 to show the user not busy.

### CALL INITIATION BY A CALLER (AN OUTBOUND CALL)

Referring to Fig. 4, the process to initiate a call from a caller to a user roaming in a service area is as follows:

### CALL REQUEST (OUTBOUND)

A call request is made when a caller makes a terrestrial PSTN or other network call to the user's home or equivalent TCTSA (gateway), rather than to a nearby uplink which would bypass the normal terrestrial structure. The call is routed to the user's HG via the normal terrestrial structure. Referring to Fig. 4, the caller using a telephone device 107,108 dials the telephone number of the user equipment 501,502 by the use of any means provided by the device. The number is passed via the terrestrial or other means lines 123,124 to the Telephone Central Office 106 or other central switching office, and thence via terrestrial lines or other means 120,121 to the Cellular Telephone System equipment 101,102 located at the user's home gateway. Referring to Fig. 6, the request for access to the user is processed by the Cellular Telephone System w/switch 221 which interrogates the home user database 224 to determine if the user is roaming in the SSA. If the user is roaming in the SSA and is not busy, the user number, location, active gateway (AG), and other user data is retrieved from the database and passed to the satellite interface equipment 201. The signal is applied to the route planner 240. The route planner processes the information, and, using stored satellite ephemeris and user information, selects the routing of the call.

### NCG ACCEPTANCE OF CALLS FROM CALLER (OUTBOUND)

The HG requests a channel assignment from the NCG. The HG formats a request for a channel assignment and sends the request to the NCG 28 via the packet network through landlines 130. The CTIU 230 at the NCG receives the request through landlines 132 and sends the request to the network computer 612. The network computer 612 checks the information being fed to it by the Satellite Monitor 611 to see if there are satellite resources and if there are resources, the channels that are available. If no satellite resources are available, the network computer 612 formats a message to signal caller that the system is busy and to retry and sends the message to CTIU 230. The CTIU 230 sends the message to the HG 101 via the packet network through landlines 132. The cellular telephone system 221 at the HG 101 receives the message through landlines 130 and signals the caller that the system is busy and to retry. If satellite resources are available, the network computer 612 checks the availability of the AG by formatting a channel request and sending the request to the AG through landlines 132. The new AG receives the message and responds. If the AG is not available, the network computer 612 checks the availability of other gateways that can be used. If no other gateways are available, the network computer 612 formats a message to signal caller that the system is busy and to retry and sends the message to CTIU 230. The CTIU 230 sends the message to the HG 101 via the packet network through landlines 132. The cellular telephone system 221 at the HG 101 receives the message through landlines 130 and signals the caller that the system is busy and to retry. If another gateway is available, the network computer 612 selects this gateway as the new AG because the current AG in not available or because of a system choice. The network computer 612 sends user ID and user location to new AG and to the user's HG via the packet network through landlines 132. The AG receives the information and updates its roamer database and the HG receives the information and updated its home user database.

The network computer 612 formats a hailing message for the user and sends the message to the CTIU 230 which routes the message to the encoder 232. The message is processed by the modem 237, satellite RF unit 238, and transmitted to the satellite through antenna 205. The satellite relays the message to the user. If no response, the NCG checks all satellites in view. If user is not found after a prescribed length of time, the network computer 612 formats a message for the caller that the user is not available and sends the message to CTIU 230. The CTIU 230 sends the message to the HG 101 via the packet network through landlines 132. The cellular telephone system 221 at the HG 101 receives the message through landlines 130 and signals the caller that the user is not available at this time. If the user receives the hailing message, referring to Fig. 5, the user receives communications in the following manner: The signals are received by the antenna 522 and sent to the Satellite RF converter 527, then passed to the modem 526. The demodulated baseband signals are then decoded by the decoder 525. The resulting signal is sent to the request/ACK generator 533 which formats an ACK message and sends the ACK to the encoder 524. After encoding, the ACK is passed to the Modem 526. The Modem modulates the signal and passes it to the Satellite RF Converter 527 for transmission to the satellite by the antenna 522,523.

Referring to Fig. 9, the uplink signal is transmitted to the satellite from the user over link "A", 34 and relayed to the NCG. The signals are downlinked via link "C", 38.

Referring to Fig. 7, the signals are received by the NCG equipment 601 by antenna 205 and applied to the satellite RF unit(s) 238. After processing the signal is applied to the modem 237 and thence to the decoder 234 if necessary. (If the user equipment generates data that conforms to industry standards, the decoding step may be bypassed.) After decoding, the signal is applied to the CTIU 230 which recognizes the ACK and sends the ACK to the network computer 612.

### OUTBOUND CALL SETUP, AG ACCEPTANCE

If the current AG is available or a new AG was selected, the network computer 612 sends user ID, current satellite being used, transmit and receive frequencies and transmit and receive codes if CDMA is being used to the AG via the packet network through landlines 132. The data is received by the AG 102 by the cellular telephone system 222 through landlines 131. The cellular telephone system 222 updates the roamer database 225 to show the call information. The cellular telephone system 222 sends the information to the CTIU 230 which sets transmit and receive frequencies, sets transmit and receive codes if CDMA is being used. The network computer 612 also sends the call information to the user by the same method as call setup as described in the request for SSA roaming. The user receives call information, sets transmit and receive frequencies, sets transmit and receive codes if CDMA is being used and goes to stand-by.

The network computer 612 sends a message to the HG to route the call to the AG via the packet network through landlines 132. The cellular telephone interface unit 230 at the HG receives the message through landlines 132. If the AG is the HG then no more call routing is required. If the AG is not the HG, then the route planner 240 at the HG routes the call from the HG to the AG. The cellular telephone system 221 at the AG processes the call and applies the desired destination number to the cellular telephone system w/switch 221.

The AG signals the user on assigned frequency and codes if required. The CTIU 230 at the AG generates ACK codes for the call request processor 235. The call request processor 235 signals the ACK generator 236 to signal the user and the user is being called. This ACK signal is applied to the encoder 232 and the modem 237 and passed to the satellite RF unit(s) . 238 and after processing applied to the antenna 203,204 for transmitting to the satellite. Referring to Figs. 4 and 8, the ACK signal is transmitted over link "D", 36 or link "B", 36 depending on whether the gateway is the home gateway or a remote gateway. The satellite receives the signal and relays the signal over link "A", 24 to the user.

Referring to Fig. 5, for reception and processing of outbound call at the user, the user's Cellular Satellite Telephone 501,502 antenna 522,523 receives the signal and routes it to the Satellite RF converter 527 which routes the signal to the modem 526. The resulting datastream is applied to the Decoder 525. After decoding, the data is sent to the request/ACK generator 533. Codes are generated and sent to the Cellular Telephone 503,504 to ring the user. The Cellular Telephone signals the ACK generator 533 to send signaling codes to the AG via the encoder 524. The ACK signal is passed from the encoder 524 to the Modem 526 and thence to the Satellite RF converter 527. The resulting ACK signal is transmitted to the Satellite 301 via the antenna 522,523. The user wireless satellite telephone 501,502 then shifts frequency to the channel selected by the NCG and loads, if necessary, the CDMA code for the call into the modem. The user then waits for duplex operation to begin.

The ACK signal is received by satellite 301 and transmitted to the earth. The signal is received at the MSA/RSA equipment 101,102 by antenna 203,204 and applied to the satellite RF unit(s) 238. After down conversion to baseband, the signals are demodulated by the modem 237 and routed to the decoder 234. The decoded baseband signals are then applied to the cellular telephone interface unit 230. The cellular telephone interface unit 230 processes the information.

The cellular telephone interface unit 230 then applies the voice and data signal stream to the encoder 232 or directly to the modem 237, depending on the incoming signal structure, and thence to the assigned channel of the satellite RF unit(s) 238, thence to the antenna 203,204. Duplex operation can now begin. The CTIU 230 at the AG sends a message to the NCG 28 to update database to show call in progress by formatting a message and sending it to the CTS 221 which sends the message to the NCG 28. The data is received by the NCG 601 by the cellular telephone system 223 through landlines 132 which sends the data to the CTIU 230. The CTIU routes the message to the network computer 612 which updates the network database 20 to show that the user has a call in progress. The cellular telephone system 221 updates the home user database 224 to show the user as roaming, the user's location and AG. The network computer 612 sends the user ID along with call in progress to the user's HG via the packet network through landlines 132. The data is received by the HG 101 by the cellular telephone system 221 through landlines 130. The cellular telephone system 221 updates the home user database 224 to show the user as having a call in progress. The Handoff Processor 250 is updated with the information regarding this duplex call.

### OUTBOUND CALL DUPLEX PROCESS

The outbound call duplex process is identical to that of a user initiated call described above.

### HANDOFF OF OUTBOUND CALLS

The handoff processes are identical to that of a user initiated call described above.

### CALL TERMINATION (OUTBOUND CALL)

The call termination processes are identical to that of a user initiated call described above.

### NOTIFICATION TO DISCONTINUE ROAMING BY USER

As in the notification to the system of the intent to commence roaming, there are two methods by which the user can notify his intent to discontinue roaming. The user has two options: he may notify Network Control (NC) of his intention while in the SSA and out of range of a TCTSA and have his request processed via a satellite relay to the NCG, or he may make his request via a participating TCTSA. These two cases are now explained (See Figs. 10A, 10K, 10L.)

### REQUEST TO DISCONTINUE ROAMING BY USER IN SSA

The user notifies the system by way of the satellite that he desires to be deleted from the Database of Roamers in the SSA. Referring to Fig. 5, the user initiates a termination request by manually or automatically activating the User Request Unit 535. A signal is passed to the Request/ACK Generator 533. This generates a termination request which is passed to the encoder 524 and modulated by the Modem 526. The resulting signal is routed to the Satellite RF Converter 527 and then to the antenna 522,523 for transmission to the satellite. The signal is transmitted to the satellite(s) in view via link "A" and the satellite(s) transmit the signal to the NCG via link "C".

Referring to Fig. 7, the downlink signal is received at the NCG satellite antenna 205 and applied to the Satellite RF Unit(s) 238. The resulting baseband signal is demodulated in the Modem 237, sent to the decoder 234 and thence to the CTIU 230. The resulting data is sent to the network computer 612 which instructs the network database 20 to delete the user from the list of SSA Roaming Users. The network computer 612 sends the termination request to the AG by formatting a message which contains the request and user ID and sending it to the cellular telephone interface unit (CTIU) 230 which routes the data to the packet switch network through landlines 132. The data is received by the AG 102 by the cellular telephone system 222 through landlines 131. The cellular telephone system 222 then deletes the user from the roamer database.

The network computer 612 sends the user ID and termination request to the user's HG 101 via the packet network through landlines 132. The data is received by the HG 101 by the cellular telephone system 221 through landlines 130. The cellular telephone system 221 updates the home user database 224 to show the user as not roaming in the SSA.

Under CDMA operation, the process of a request for termination is similar to that described for a request for roaming. Two methods are available as previously mentioned: (1) An FDM-FM or other modulation using contention multiple access, operating on a hailing channel, or (2) a special identifying CDMA code placed in the User Request Unit 535. The process continues as described hereinabove.

### REQUEST TO DISCONTINUE ROAMING BY USER IN A TCTSA

Referring to Fig. 1 and Fig. 10L, the user re-enters a remote MSA/RSA or his Home MSA/RSA and either automatically or manually notifies the system by way of the TCTSA that he desires to be deleted from the network database of active users in the SSA. Referring to Fig. 5, the user equipment 501,502 initiates a termination request by manually or automatically activating the User Request Unit 535. A signal is passed to the Request/ACK Generator 533. This generates a termination request which is passed to the Cellular Telephone 503,504 the resulting signal is routed to the antenna 505,506 for transmission to the TCTSA. The signal is received by the TCTSA and relayed to the NCG via the packet network through landlines 130,131. Referring to Fig. 7, the signal is received via landline 132 at the NCG 601 which instructs the network database 20 to delete the user from the list of SSA Roaming Users. The network computer 612 sends the termination request to the AG by formatting a message which contains the request and user ID and sending it to the cellular telephone interface unit (CTIU) 230 which routes the data to the cellular telephone system 223 and to the packet switch network through landlines 132. The data is received by the AG 102 by the cellular telephone system 222 through landlines 131. The cellular telephone system 222 then deletes the user from the roamer database.

The network computer 612 sends the user ID and termination request to the user's HG 101 via the packet network through landlines 132. The data is received by the HG 101 by the cellular telephone system 221 through landlines 130. The cellular telephone system 221 updates the home user database 224 to show the user as not roaming in the SSA.

The invention has now been explained with reference to specific embodiments. Other embodiments will be apparent to those of ordinary skill int this art in light of this disclosure. It is therefore not intended that this invention be limited, except as indicated by the appended claims.

## Claims

1. A satellite communications system (10) operative in connection with an existing terrestrial communications system (17,21), comprising
at least one satellite means (22) in earth orbit;
at least one gateway (12,14,16,18) at a terrestrial location bidirectionally coupled to said terrestrial communications system (10), said at least one terrestrial gateway (12,14,16,18) further being bidirectionally coupled through first communication links (36,38) on a first frequency to said at least one satellite means (22) for transmitting communications traffic to, and for receiving communications traffic from, said at least one satellite means (22), said communications traffic including call set-up control information and call signals;
a plurality of wireless telephone transceivers associated with users (30) of said satellite communications system (10), each of said transceivers being bidirectionally coupled, in use, through second communications links (34) on a second frequency to said at least one satellite means (22) for transmitting communications traffic to, and for receiving communications traffic from, said at least one satellite means (22);
a network control means (25) at a terrestrial location for controlling call signals in the terrestrial communications system (32);
a network database management system for managing a network database (20) containing identification of each active user (30), location of said active user and a home gateway of said active user;
at least one network coordinating gateway (28) at a terrestrial location coupled to said at least one satellite means (22) through said first communications links (38) for receiving requests for service from active transceivers, said at least one network coordinating gateway (28) including means for selecting a terrestrial gateway (12,14,16,18) to establish a bidirectional communications link between said active transceiver that is requesting service and said terrestrial communications system (32), said at least one network coordinating gateway (28) further comprising means for maintaining a copy of said network database; and
means for maintaining and updating each said copy of said network database (20) in substantially real time; wherein
communications traffic to an active one of said transceivers is passed through and repeated by said at least one satellite means (22) by being received from one of said first communications links (36,38), and transmitted to one of said second communications links (34), without regard for any informational content of said communications traffic; and wherein
communications traffic from an active one of said transceivers is passed through and repeated by said at least one satellite means (22), by being received from one of said second communications links (34) and transmitted to one of said first communications links (36,38), without regard for any informational content of said communications traffic.

2. The system according to claim 1, wherein at least one of said gateways (12,14,16,18) contains a copy of said network database (20), further including means (33) within each one of said gateways (12,14,16,18) for effecting hand-off of said first communications links (36) from said satellite (22) to a second satellite (22) under control of a single one of said gateways.

3. The system according to claim 2, wherein said second satellite (22) is in passage over said user and said gateway (12,14,16,18).

4. The system according to claim 1, 2 or 3, wherein said first communication links (36,38) use frequencies within a first band of frequencies, and wherein said second communication links (34) use frequencies within a second band of frequencies that differs from the first band of frequencies.

5. The system according to any of claims 1 to 4, wherein the communications traffic is conveyed over said communications links using a spread spectrum, code-division-multiple-access technique.

6. The system according to any of claims 1 to 5, comprising at least one satellite in orbit, each said satellite comprising:
communications processor uplink means for receiving uplinked communications signals from users (30), gateways (12,14,16,18) and network controls (25,28); and
communications processor downlink means for transmitting communications signals, without control intervention, to users (30), gateways (12,14,16,18) and network controls means (25,28); wherein
communications traffic received on an uplink means (34) from users (30) is passed through and repeated by said satellite (22) and transmitted on a downlink means (36,38) to said gateways (12,14,16,18) and said network controls means (25,28) without regard for any informational content of said communications traffic; and wherein
communications traffic received on an uplink means (36,38) from said gateways (12,14,16,18) and said network controls means (25,28) is passed through and repeated by said satellite (22) and transmitted on a dowlink means (34) to users (30), without regard for any informational content of said communications traffic.

7. A method for performing wireless communications in a satellite communications system (10) comprising at least one satellite (28) in each orbit, that is bidirectionally coupled to a terrestrial communications network (17,21) comprising the steps of:
initiating a request for service with a wireless transceiver of a group of wireless transceivers associated with users (30) of the satellite communications system (10), individual ones of the group of wireless transceivers being bidirectionally coupled, when active, through first communications links (34) on a first frequency to the at least one satellite (22) for transmitting communications signals to, and for receiving communication signals from, the at least one satellite;
transmitting the request for service from the wireless transceiver over one of the first communications links (34) on a first frequency to the at least one satellite;
repeating the request for service by receiving the request for service with the at least one satellite from the one of the first communications links (34) on a first frequency, shifting the received request for service, and transmitting frequency shifted request for service to one of second communications links (38) on a second frequency, without regard for any informational content of the request for service;
receiving the repeated request for service with at least one network coordinating gateway (28), the at least one network coordinating gateway (28) being bidirectionally coupled to the at least one satellite (22) through the second communications links (38) on a second frequency and further being bidirectionally coupled through a terrestrial data network (32), to a plurality of terrestrial gateways (12,14,16,18) at terrestrial locations, each having an associated service area individual ones of the plurality of terrestrial gateways being bidirectionally coupled to the terrestrial communications network (32) and further being bidirectionally coupled through the second communications links on a second frequency to the at least one satellite (22) for transmitting communications signals to, and for receiving communications signals from, the at least one satellite;
selecting, with the network coordinating gateway (28) one of the plurality of terrestrial gateways (12,14,16,18) to couple the wireless transceiver requesting service to the terrestrial communications network; and
in response to the selected one of the terrestrial gateways establishing a wireless communications link between the wireless transceiver requesting service and the terrestrial communications network, the established wireless communications link having a first uplink communications signal component from the wireless transceiver to the at least one satellite (22), a first downlink communications signal component from the at least one satellite (22) to the selected terrestrial gateway (12,14,16,18), a second uplink communications signal component from the terrestrial gateway (12,14,16,18) to the at least one satellite (22), and a second downlink communications signal component from the at least one satellite (22) to the wireless transceiver;
repeating the first uplink communications signals with the at least one satellite by receiving the first uplink communications signals, frequency shifting the received first uplink communications signals, and transmitting the frequency shifted first uplink communications signals as the first downlink communications signals, without regard for any informational content of the first uplink communications signals;
repeating the second uplink communications signals with the at least one satellite by receiving the second uplink communications signals, frequency shifting the received second uplink communications signals, and transmitting the frequency shifted second uplink communications signals as the second downlink communications signals, without regard for any informational content of the second uplink communications signals; and
maintaining at the network coordinating gateway (28) a copy of a satellite communications system network database of users (20) that is bidirectionally coupled to the at least one network coordinating gateway (28), the satellite communications system network database of users (20) storing information for identifying at least (a) active wireless transceivers, (b) a physical location of the active wireless transceivers, and (c) a home terrestrial gateway of the active wireless transceivers.

8. A method as set forth in claim 7 wherein the at least one satellite (22) is one of a plurality of satellites forming a constellation of earth orbit satellites, and further comprising a step of transferring the established wireless communications link from a first satellite to a second satellite.

9. A method as set forth in claim 7 or 8 wherein the step of repeating the request for service, the step of repeating the first uplink communications signals, and the step of repeating the second uplink communications signals all repeat spread spectrum, code division multiple access signals.

10. A method as set forth in claim 7, 8 or 9 wherein the step of maintaining includes steps of:
identifying each wireless telephone transceiver with a single terrestrial service area having linking capabilities to said satellite communications system network database of users;
and linking under terrestrially-based control (25) said satellite (22) to said plurality of terrestrial gateways and to said wireless transceiver based on said information in said network database (20) of users.

11. The method according to claim 10, wherein at least one gateway contains a copy of said network database (20) of users and further comprising the step of:
processing said information in said network database of users to effect hand-off of said communications links from said satellite (22) to a second satellite.

12. The method according to claim 11, wherein said second satellite is in passage over said users during hand-off to maintain coverage in said terrestrial service area.

13. The method according to claim 11 or 12 further including the step of processing the gateway hand-off of calls to another satellite in passage over said user.

14. The method according to any of claims 7 to 13, further comprising:
establishing a user (30) of said wireless transceiver apparatus as a roamer by issuing a request for roaming from the user in the satellite service area; and
updating the network database (20) of users to include the user (30) as a roamer.

15. The method according to claim 14 wherein the user (30) is in the satellite service area.

16. The method according to claim 14 wherein the user (30) is in a terrestrial service area within the satellite service area.

17. The method according to any of claims 7 to 16, further including the step of initiating, by the user (30), an inbound call, accepting at the gateway (12,14,16,18,28) the inbound call from the user, and establishing routing by the gateway for call setup.

18. The method according to any of claims 7 to 17, further including the step of initiating, by any caller, an outbound call from the caller, and establishing routing by the gateway for call setup to the user.

19. The method according to any of claims 7 to 18, further including the step of transmitting a command over the terrestrial communications network from the network coordinating gateway (28) to the selected one of the terrestrial gateways, the transmitted command instructing the selected one of the terrestrial gateways to establish a wireless communication link between the wireless transceiver requesting service and the terrestrial communications network.

## Patentansprüche

1. Satelliten-Nachrichtensystem (10), das in Verbindung mit einem bestehenden terrestrischen Nachrichtensystem (17, 21) arbeitet, mit
mindestens einem Satellitenmittel (22) in Erdumlaufbahn;
mindestens einer Vermittlung (12, 14, 16, 18) an einem terrestrischen Ort, die bidirektional mit dem terrestrischen Nachrichtensystem (10) gekoppelt ist, wobei die mindestens eine terrestrische Vermittlung (12, 14, 16, 18) weiter durch erste Nachrichtenverbindungen (36, 38) an einer ersten Frequenz mit dem ersten mindestens einen Satellitenmittel (22) bidirektional gekoppelt ist zum Senden von Nachrichtenverkehr zu und zum Empfangen von Nachrichtenverkehr von dem mindestens einen Satellitenmittel (22), wobei der Nachrichtenverkehr Anruf-Aufbausteuerungs-Information und Rufsignale enthält;
einer Vielzahl von Funkfernsprech-Sendeempfängern, die Nutzern (30) des Satelliten-Nachrichtensystems (10) zugeordnet sind, wobei jeder der Sendeempfänger im Gebrauch bidirektional durch zweite Nachrichtenverbindungen (34) an einer zweiten Frequenz mit dem mindestens einen Satellitenmittel (22) gekoppelt ist zum Senden von Nachrichtenverkehr zu und zum Empfangen von Nachrichtenverkehr von dem mindestens einen Satellitenmittel (22);
einem Netzwerk-Steuermittel (25) an einem terrestrischen Ort zum Steuern von Rufsignalen in dem terrestrischen Nachrichtensystem (32);
einem Netzwerk-Datenbasis-Verwaltungssystem zum Verwalten einer Netzwerk-Datenbasis (20), welche Identifizierung von jedem aktiven Nutzer (30), dem Ort des aktiven Nutzers und einer Heimatvermittlung des aktiven Nutzers enthält;
mindestens einer Netzwerkkoordinierungs-Vermittlung (28) an einem terrestrischen Ort, die mit dem mindestens einen Satellitenmittel (22) durch die ersten Nachrichtenverbindungen (38) gekoppelt ist zum Empfang von Dienstleitungsanforderungen von aktiven Sendeempfängern, welche mindestens eine Netzwerk-Koordinierungsvermittlung (28) Mittel zum Auswählen einer terrestrischen Vermittlung (12, 14, 16, 18) zum Einrichten einer bidirektionalen Nachrichtenverbindung zwischen dem aktiven Sendeempfänger, der Dienstleitung anfordert, und dem terrestrischen Nachrichtenverbindungssystem (32) enthält, wobei die mindestens eine Netzwerkkoordinierungs-Vermittlung (28) weiter Mittel zum Aufrechterhalten einer Kopie der Netzwerk-Datenbasis umfaßt; und
Mittel zum Aufrechterhalten und Aktualisieren jeder solcher Kopien der Netzwerk-Datenbasis (20) im wesentlichen in Realzeit; wobei
Nachrichtenverkehr zu einem aktiven der Sendeempfänger durch das mindestens eine Satellitenmittel (22) hindurchgeleitet und von ihm wiederholt wird, indem es von einer der ersten Nachrichtenverbindungen (36, 28) empfangen und an eine der zweiten Nachrichtenverbindungen (34) gesendet wird, ohne Bezug auf irgendeinen Informationsgehalt des Nachrichtenverkehrs; und wobei
Nachrichtenverkehr von einem aktiven der Sendeempfänger durch das mindestens eine Satellitenmittel (22) durchgeleitet und von ihm wiederholt wird durch Empfangen von einer der zweiten Nachrichtenverbindungen (34) und Senden zu einer der ersten Nachrichtenverbindungen (36, 38) ohne Bezug auf irgendeinen Informationsgehalt des Nachrichtenverkehrs.

2. System nach Anspruch 1, bei dem mindestens eine der Vermittlungen (12, 14, 16, 18) eine Kopie der Netzwerk-Datenbasis (20) enthält und weiter Mittel (33) in jeder der Vermittlungen (12, 14, 16, 18) enthalten sind, um eine Übergabe der ersten Nachrichtenverbindungen (36) von dem Satelliten (22) zu einem zweiten Satelliten (22) unter Steuerung einer einzelnen aus den Vermittlungen zu bewirken.

3. System nach Anspruch 2, bei dem der zweite Satellit (22) im Durchlauf über dem Benutzer und der Vermittlung (12, 14, 16, 18) ist.

4. System nach Anspruch 1, 2 oder 3, bei dem die ersten Nachrichtenverbindungen (36, 38) Frequenzen innerhalb eines ersten Frequenzbandes benutzen, und bei dem die zweiten Nachrichtenverbindungen (34) Frequenzen innerhalb eines zweiten Frequenzbandes benutzen, das von dem ersten Frequenzband verschieden ist.

5. System nach einem der Ansprüche 1 bis 4, bei dem der Nachrichtenverkehr über die Nachrichtenverbindungen mit Benutzung einer Spreizspektrum-Kodeteilungs-Mehrfachzugriff-Technik befördert wird.

6. System nach einem der Ansprüche 1 bis 5, das mindestens einen Satelliten in Erdumlaufbahn umfaßt, wobei jeder solche Satellit enthält:
Nachrichtenprozessor-Aufwärtsverbindungsmittel zum Empfangen aufwärtsverbundener Nachrichtensignale von Nutzern (30), Vermittlungen (12, 14, 16, 18) und Netzwerksteuerungen (25, 28); und
Nachrichtenprozessor-Abwärtsverbindungsmittel zum Senden von Nachrichtensignalen ohne Steuereingriff zu Nutzern (30), Vermittlungen (12, 14, 16, 18) und Netzwerksteuermitteln (25, 28); wobei
Nachrichtenverkehr, der an einem Aufwärtsverbindungsmittel (34) von Nutzern (30) empfangen wird, durch den Satelliten durchgeleitet und von ihm wiederholt wird und an einem Abwärtsverbindungsmittel (36, 38) zu den Vermittlungen (12, 14, 16, 18) und den Netzwerksteuermitteln (25, 28) gesendet wird, ohne Bezug auf irgendwelchen Informationsgehalt des Nachrichtenverkehrs; und wobei
Nachrichtenverkehr, der an einem Aufwärtsverbindungsmittel (36, 38) von den Vermittlungen (12, 14, 16, 18) und den Netzwerksteuermitteln (25, 28) empfangen wird, durch den Satelliten durchgeleitet und von ihm wiederholt und an einem Abwärtsverbindungsmittel zu Nutzern (30) gesendet wird, ohne Bezug auf irgendwelchen Informationsgehalt des Nachrichtenverkehrs.

7. Verfahren zum Ausführen von Funknachrichtenverbindungen in einem Satelliten-Nachrichtensystem (10), das mindestens einen Satelliten (28) in jeder Erdumlaufbahn enthält, der bidirektional mit einem terrestrischen Nachrichten-Netzwerk (17, 21) gekoppelt ist, mit den Schritten:
Einleiten einer Dienstleistungsanforderung mit einem Funksendeempfänger einer Gruppe von Funksendeempfängern, die Nutzern (30) des Satelliten-Nachrichtenverbindungssystems (10) zugeordnet sind, wobei einzelne der Gruppe von Funksendeempfängern im aktiven Zustand bidirektional durch erste Nachrichtenverbindungen (34) an einer ersten Frequenz mit dem mindestens einen Satelliten (22) gekoppelt sind zum Senden von Nachrichtensignalen zu und zum Empfangen von Nachrichtensignalen von dem mindestens einen Satelliten;
Senden der Dienstleistungsanforderung von dem Funksendeempfänger über eine der ersten Nachrichtenverbindungen (34) an einer ersten Frequenz zu dem mindestens einen Satelliten;
Wiederholen der Dienstleistungsanforderungen durch Empfangen der Dienstleistungsanforderung mit dem mindestens einen Satelliten von der einen der ersten Nachrichtenverbindungen (34) an der ersten Frequenz, Verschieben der empfangenen Dienstleistungsanforderung und Senden der frequenzverschobenen Dienstleistungsanforderung zu einer der zweiten Nachrichtenverbindungen (38) an einer zweiten Frequenz, ohne Bezug auf irgendwelchen Informationsgehalt der Dienstleistungsanforderung;
Empfangen der wiederholten Dienstleistungsanforderung mit mindestens einer Netzwerk-Koordinationsvermittlung (28), welche mindestens eine Netzwerk-Koordinationsvermittlung (28) bidirektional mit dem mindestens einen Satelliten (22) durch die zweiten Nachrichtenverbindungen (38) an einer zweiten Frequenz gekoppelt ist, und weiter bidirektional durch ein terrestrisches Datennetzwerk (32) mit einer Vielzahl terrestrischer Vermittlungen (12, 14, 16, 18) an terrestrischen Orten gekoppelt ist, von denen jede einen zugeordneten Dienstbereich besitzt, einzelne der aus der Vielzahl von terrestrischen Vermittlungen bidirektional mit dem terrestrischen Nachrichtenverbindungs-Netzwerk (32) gekoppelt und weiter bidirektional durch die zweiten Nachrichtenverbindungen an einer zweiten Frequenz mit dem mindestens einen Satelliten (22) gekoppelt sind zum Senden von Nachrichtensignalen zu und zum Empfangen von Nachrichtensignalen von dem mindestens einen Satelliten;
mit der Netzwerk-Koordinationsvermittlung (28), Auswählen einer aus der Vielzahl von terrestrischen Vermittlungen (12, 14, 16, 18), um den Dienstleistung anfordernden Funksendeempfänger mit dem terrestrischen Nachrichten-Netzwerk zu koppeln; und
in Reaktion darauf, dass die ausgewählte der terrestrischen Vermittlungen eine Funknachrichtenverbindung zwischen dem eine Dienstleistung anfordernden Funksendeempfänger und dem terrestrischen Nachrichten-Netzwerk einrichtet, Versehen der eingerichteten Funknachrichtenverbindung mit einer ersten Aufwärtsverbindungs-Nachrichtensignalkomponente von dem Funksendeempfänger zu dem mindestens einen Satelliten (22), einer ersten Abwärtsverbindungs-Nachrichtensignalkomponente von dem mindestens einen Satelliten (22) zu der ausgewählten terrestrischen Vermittlung (12, 14, 16, 18), einer zweiten Aufwärtsverbindungs-Nachrichtensignalkomponente von der terrestrischen Vermittlung (12, 14, 16, 18) zu dem mindestens einen Satelliten (22) und einer zweiten Abwärtsverbindungs-Nachrichtensignalkomponente von dem mindestens einen Satelliten (22) zu dem Funksendeempfänger;
Wiederholen der ersten Aufwärtsverbindungs-Nachrichtensignale mit dem mindestens einen Satelliten durch Empfangen der ersten Aufwärtsverbindungs-Nachrichtensignale, Frequenzverschieben der empfangenen ersten Aufwärtsverbindungs-Nachrichtensignale und Senden der frequenzverschobenen ersten Aufwärtsverbindungs-Nachrichtensignale als die ersten Abwärtsverbindungs-Nachrichtensignale ohne Bezug auf irgendeinen Informationsgehalt der ersten Aufwärtsverbindungs-Nachrichtensignale;
Wiederholen der zweiten Aufwärtsverbindungs-Nachrichtensignale mit dem mindestens einen Satelliten durch Empfangen der zweiten Aufwärtsverbindungs-Nachrichtensignale, Frequenzverschieben der empfangenen zweiten Aufwärtsverbindungs-Nachrichtensignale und Senden der frequenzverschobenen zweiten Aufwärtsverbindungs-Nachrichtensignale als die zweiten Abwärtsverbindungs-Nachrichtensignale ohne Bezug auf irgendeinen Informationsgehalt der zweiten Aufwärtsverbindungs-Nachrichtensignale; und
Aufrechterhalten einer Kopie einer Satelliten-NachrichtenNetzwerk-Datenbasis von Nutzern (20), die bidirektional mit der mindestens einen Netzwerk-Koordinationsvermittlung (28) gekoppelt sind, bei der Netzwerk-Koordinationsvermittlung (28), wobei die Satelliten-NachrichtensystemNetzwerk-Datenbasis von Nutzern (20) Information zum Identifizieren mindestens (a) aktiver Funksendeempfänger, (b) eines physikalischen Ortes der aktiven Funksendeempfänger und (c) einer terrestrischen Heimatvermittlung der aktiven Funksendeempfänger speichert.

8. Verfahren nach Anspruch 7, bei dem der mindestens eine Satellit (22) einer einer Vielzahl von Satelliten ist, welche eine Zusammenstellung von Erdumlaufsatelliten bilden, und das weiter einen Schritt des Übertragens der eingerichteten Funknachrichtenverbindungen von dem ersten Satelliten zu einem zweiten Satelliten umfaßt.

9. Verfahren nach Anspruch 7 oder 8, bei dem der Schritt des Wiederholens der Dienstleistungsanforderung, der Schritt des Wiederholens der ersten Aufwärtsverbindungs-Nachrichtensignale und der Schritt des Wiederholens der zweiten Aufwärtsverbindungs-Nachrichtensignale alle Spreizspektrum-Kodeteilungs-Mehrfachzugriff-Signale wiederholen.

10. Verfahren nach Anspruch 7, 8 oder 9, bei dem der Schritt des Aufrechterhaltens Schritte umfaßt:
des Identifizierens jedes Funkfernsprech-Sendeempfängers mit einem einzelnen terrestrischen Dienstbereich mit Verbindungsfähigkeit zu der Satelliten-Nachrichtensystem-Netzwerk-Datenbasis von Nutzern;
und des Verbindens des Satelliten (22) mit der Vielzahl von terrestrischen Vermittlungen und dem Funksendeempfänger unter erdgebundener Steuerung (25) aufgrund der Information in der Netzwerk-Datenbasis (20) von Nutzern.

11. Verfahren nach Anspruch 10, bei dem mindestens eine Vermittlung eine Kopie der Netzwerk-Datenbasis (20) von Nutzern enthält, und das weiter den Schritt umfaßt:
des Verarbeitens der Information in der Netzwerk-Datenbasis von Nutzern, um Übergabe der Nachrichtenverbindungen von dem Satelliten (22) zu einem zweiten Satelliten zu bewirken.

12. Verfahren nach Anspruch 11, bei dem der zweite Satellit sich während der Übergabe im Durchlauf über den Benutzern befindet, um die Überdeckung in dem terrestrischen Dienstleistungsbereich aufrecht zu erhalten.

13. Verfahren nach Anspruch 11 oder 12, das weiter den Schritt des Verarbeitens der Vermittlungsübergabe von Rufen zu anderen Satelliten im Durchlauf über dem Nutzer enthält.

14. Verfahren nach einem der Ansprüche 7 bis 13, das weiter umfaßt:
Einrichten eines Nutzers (30) der Funksendeempfänger-Vorrichtung als einen Wanderer durch Ausgeben einer Anforderung nach Wandern von dem Nutzer in dem Satelliten-Dienstleistungsbereich; und
Aktualisieren der Netzwerk-Datenbasis (20) von Nutzern, damit der Nutzer (30) als einen Wanderer enthalten ist.

15. Verfahren nach Anspruch 14, bei dem der Nutzer (30) sich in dem Satelliten-Dienstleistungsbereich befindet.

16. Verfahren nach Anspruch 14, bei dem der Nutzer (30) sich in einem terrestrischen Dienstleistungsbereich innerhalb des Satelliten-Dienstleistungsbereiches befindet.

17. Verfahren nach einem der Ansprüche 7 bis 16, das weiter den Schritt des Einleitens eines innen-gerichteten Anrufes durch den Nutzer (30), das Annehmen des innen-gerichteten Anrufes von dem Nutzer bei der Vermittlung (12, 14, 16, 18, 28) und Einrichten des Durchleitens für Anruf-Aufstellung durch die Vermittlung enthält.

18. Verfahren nach einem der Ansprüche 7 bis 17, das weiter den Schritt des Einleitens durch irgendwelche Anrufer eines auswärts-gerichteten Anrufes von dem Anrufer und des Einrichtens einer Durchleitung durch die Vermittlung für Anruf-Einrichtung zu dem Nutzer enthält.

19. Verfahren nach einem der Ansprüche 7 bis 18, das weiter den Schritt des Sendens eines Befehls über das terrestrische Nachrichten-Netzwerk von der Netzwerk-Koordinationsvermittlung (28) zu der ausgewählten der terrestrischen Vermittlungen enthält, wobei der gesendete Befehl die ausgewählte der terrestrischen Vermittlungen instruiert, eine Funknachrichtenverbindung zwischen dem Dienstleistung anfordernden Funksendeempfänger und dem terrestrischen Nachrichten-Netzwerk einzurichten.

## Revendications

1. Système de communications par satellite (10) fonctionnant en liaison avec un système de communications terrestre existant (17, 21), comprenant
au moins un moyen de satellite (22) en orbite terrestre,
au moins une passerelle (12, 14, 16, 18) à un emplacement au sol relié de façon bidirectionnelle audit système de communications terrestre (10), ladite au moins une passerelle terrestre (12, 14, 16, 18) étant en outre reliée de façon bidirectionnelle par l'intermédiaire de premières liaisons de communications (36, 38) sur une première fréquence audit au moins un moyen de satellite (22) afin de transmettre un trafic de communications vers ledit au moins un moyen de satellite (22) et de recevoir un trafic de communications depuis celui-ci, ledit trafic de communications comprenant des informations de commande d'établissement d'appel et des signaux d'appel,
une pluralité d'émetteurs-récepteurs de téléphone sans fil associés à des utilisateurs (30) dudit système de communications par satellite (10), chacun desdits émetteurs-récepteurs étant reliés de façon bidirectionnelle, en utilisation, par l'intermédiaire de secondes liaisons de communications (34) sur une seconde fréquence audit au moins un moyen de satellite (22) afin de transmettre un trafic de communications vers ledit au moins un moyen de satellite (22), et à recevoir un trafic de communications depuis celui-ci,
un moyen de commande de réseau (25) à un emplacement terrestre destiné à commander les signaux d'appel dans le système de communications terrestre (32),
un système de gestion de base de données de réseau destiné à gérer une base de données de réseau (20) contenant une identification de chaque utilisateur actif (30), l'emplacement dudit utilisateur actif et une passerelle de rattachement dudit utilisateur actif,
au moins une passerelle de coordination de réseau (28) à un emplacement terrestre reliée audit au moins un moyen de satellite (22) par l'intermédiaire desdites premières liaisons de communications (38) afin de recevoir des demandes de services provenant des émetteurs-récepteurs actifs, ladite au moins une passerelle de coordination de réseau (28) comprenant un moyen destiné à sélectionner une passerelle terrestre (12, 14, 16, 18) afin d'établir une liaison de communications bidirectionnelle entre ledit émetteur-récepteur actif qui demande des services et ledit système de communications terrestre (32), ladite au moins une passerelle de coordination de réseau (28) comprenant en outre un moyen destiné à conserver une copie de ladite base de données de réseau, et
un moyen destiné à conserver et à mettre ajour chaque dite copie de ladite base de données de réseau (20) pratiquement en temps réel, dans lequel
un trafic de communications vers un émetteur-récepteur actif parmi lesdits émetteurs-récepteurs est transmis par l'intermédiaire dudit au moins un moyen de satellite (22) et est répété par celui-ci en étant reçu depuis l'une desdites premières liaisons de communications (36, 38), et transmis vers l'une desdites secondes liaisons de communications (34), sans considérer le contenu en informations quelconque dudit trafic de communications, et dans lequel
un trafic de communications provenant d'un émetteur-récepteur actif parmi lesdits émetteurs-récepteurs est transmis par l'intermédiaire dudit au moins un moyen de satellite (22) et est répété par celui-ci, en étant reçu à partir de l'une desdites secondes liaisons de communications (34) et transmis vers l'une desdites premières liaisons de communications (36, 38), sans considérer un contenu en informations quelconque dudit trafic de communications.

2. Système selon la revendication 1, dans lequel au moins l'une desdites passerelles (12, 14, 16, 18) contient une copie de ladite base de données de réseau (20), et comprend en outre un moyen (33) à l'intérieur de chacune desdites passerelles (12, 14, 16, 18) afin de réaliser le transfert desdites premières liaisons de communications (36) depuis ledit satellite (22) vers un second satellite (22) sous la commande d'une seule desdites passerelles.

3. Système selon la revendication 2, dans lequel ledit second satellite (22) est en cours de passage au-dessus dudit utilisateur et de ladite passerelle (12, 14, 16, 18).

4. Système selon la revendication 1, 2 ou 3, dans lequel lesdites premières liaisons de communications (36, 38) utilisent des fréquences à l'intérieur d'une première bande de fréquences, et dans lequel lesdites secondes liaisons de communications (34) utilisent des fréquences à l'intérieur d'une seconde bande de fréquences qui diffère de la première bande de fréquences.

5. Système selon l'une quelconque des revendications 1 à 4, dans lequel le trafic de communications est acheminé sur lesdites liaisons de communications en utilisant une technologie d'accès multiple par répartition de codes à étalement de spectre.

6. Système selon l'une quelconque des revendications 1 à 5, comprenant au moins un satellite en orbite, chaque dit satellite comprenant :
un moyen de liaison montante de processeur de communications destiné à recevoir des signaux de communications transmis sur une liaison montante depuis les utilisateurs (30), des passerelles (12, 14, 16, 18) et des commandes de réseau (25, 28), et
un moyen de liaison descendante de processeur de communications destiné à transmettre des signaux de communications, sans intervention de la commande, vers des utilisateurs (30), des passerelles (12, 14, 16, 18) et un moyen de commande de réseau (25, 28), dans lequel
un trafic de communications reçu sur un moyen de liaison montante (34) provenant des utilisateurs (30) est transmis par l'intermédiaire dudit satellite (22) et est répété par celui-ci et est transmis sur un moyen de liaison descendante (36, 38) vers lesdites passerelles (12, 14, 16, 18) et lesdits moyens de commande de réseau (25, 28) sans considérer un contenu en informations quelconque dudit trafic de communications, et dans lequel
un trafic de communications reçu sur un moyen de liaison montante (36, 38) provenant desdites passerelles (12, 14, 16, 18) et dudit moyen de commande de réseau (25, 28) est transmis par l'intermédiaire dudit satellite (22) et est répété par celui-ci et est transmis sur un moyen de liaison descendante (34) vers des utilisateurs (30) sans considérer un contenu en informations quelconque dudit trafic de communications.

7. Procédé destiné à exécuter des communications sans fil dans un système de communications par satellite (10) comprenant au moins un satellite (28) dans chaque orbite, qui est relié de façon bidirectionnelle à un réseau de communications terrestre (17, 21) comprenant les étapes consistant à:
lancer une demande de service avec un émetteur-récepteur sans fil d'un groupe d'émetteurs-récepteurs sans fil associés à des utilisateurs (30) du système de communications par satellite (10), des émetteurs-récepteurs individuels parmi le groupe des émetteurs-récepteurs sans fil étant reliés de façon bidirectionnelle, lorsqu'ils sont actifs, par l'intermédiaire de premières liaisons de communications (34) sur une première fréquence vers le au moins un satellite (22) afin de transmettre des signaux de communications vers le au moins un satellite et afin de recevoir des signaux de communications depuis celui-ci,
transmettre la demande de service à partir de l'émetteur-récepteur sans fil sur l'une desdites premières liaisons de communications (34) sur une première fréquence vers le au moins un satellite,
répéter la demande de service en recevant la demande de service avec le au moins un satellite depuis la liaison parmi les premières liaisons de communications (34) sur une première fréquence, en décalant la demande de service reçue et en transmettant la demande de service décalée en fréquence vers l'une des secondes liaisons de communications (38) sur une seconde fréquence, sans considérer aucun contenu en informations de la demande de service,
recevoir la demande de service répétée avec au moins une passerelle de coordination de réseau (28), la au moins une passerelle de coordination de réseau (28) étant reliée de façon bidirectionnelle au au moins un satellite (22) par l'intermédiaire des secondes liaisons de communications (38) sur une seconde fréquence et étant en outre reliée de façon bidirectionnelle, par l'intermédiaire d'un réseau de données terrestre (32), à une pluralité de passerelles terrestres (12, 14, 16, 18) à des emplacements terrestres, chacune présentant une zone de services associée, des passerelles individuelles parmi la pluralité de passerelles terrestres étant reliées de façon bidirectionnelle au réseau de communications terrestre (32) et étant en outre reliées de façon bidirectionnelle par l'intermédiaire des secondes liaisons de communications sur une seconde fréquence au au moins un satellite (22) afin de transmettre des signaux de communications vers le au moins un satellite et à recevoir des signaux de communications depuis celui-ci,
sélectionner, avec la passerelle de coordination de réseau (28) une passerelle parmi la pluralité des passerelles terrestres (12, 14, 16, 18) afin de relier l'émetteur-récepteur sans fil demandant un service au réseau de communications terrestre, et
en réponse à la passerelle sélectionnée parmi les passerelles terrestres, établir une liaison de communications sans fil entre l'émetteur-récepteur sans fil demandant un service et le réseau de communications terrestre, la liaison de communications sans fil établie comportant une première composante de signal de communications de liaison montante provenant de l'émetteur-récepteur sans fil vers le au moins un satellite (22), une première composante de signal de communications de liaison descendante provenant du au moins un satellite (22) vers la passerelle terrestre sélectionnée (12, 14, 16, 18), une seconde composante de signal de communications de liaison montante provenant de la passerelle terrestre (12, 14, 16, 18) vers le au moins un satellite (22), et une seconde composante de signal de communications de liaison descendante provenant du au moins un satellite (22) vers l'émetteur-récepteur sans fil,
répéter les premiers signaux de communications de liaison montante avec le au moins un satellite en recevant les premiers signaux de communications de liaison montante, en décalant en fréquences les premiers signaux de communications de liaison montante reçus, et en transmettant des premiers signaux de communications de liaison montante décalés en fréquence sous forme des premiers signaux de communications de liaison descendante, sans considérer un contenu en informations quelconque des premiers signaux de communications de liaison montante,
répéter les seconds signaux de communications de liaison montante avec le au moins un satellite en recevant les seconds signaux de communications de liaison montante, en décalant en fréquence les seconds signaux de communications de liaison montante reçus et en transmettant les seconds signaux de communications de liaison montante décalés en fréquence en tant que seconds signaux de communications de liaison descendante, sans considérer aucun contenu en informations quelconque des seconds signaux de communications de liaison montante, et
conserver au niveau de la passerelle de coordination de réseau (28) une copie d'une base de données de réseau du système de communications par satellite des utilisateurs (20) qui est reliée de façon bidirectionnelle à la au moins une passerelle de coordination de réseau (28), la base de données des utilisateurs (20) du réseau de système de communications par satellite mémorisant des informations destinées à identifier au moins (a) des émetteurs-récepteurs sans fil actifs, (b) un emplacement physique des émetteurs-récepteurs sans fil actifs, et (c) une passerelle terrestre de rattachement des émetteurs-récepteurs sans fil actifs.

8. Procédé selon la revendication 7, dans lequel le au moins un satellite (22) est l'un d'une pluralité de satellites formant une constellation de satellites en orbite terrestre et qui comprend en outre une étape consistant à transférer la liaison de communications sans fil établie depuis un premier satellite vers un second satellite.

9. Procédé selon la revendication 7 ou 8, dans lequel l'étape de répétition de la demande de service, l'étape de répétition des premiers signaux de communications de liaison montante, et l'étape de répétition des seconds signaux de communications de liaison montante répètent toutes des signaux à accès multiple à répartition de codes à étalement de spectre.

10. Procédé selon la revendication 7, 8 ou 9, dans lequel l'étape de conservation comprend les étapes consistant à :
identifier chaque émetteur-récepteur de téléphone sans fil avec une zone de service terrestre unique présentant des possibilités de liaison avec ladite base de données des utilisateurs du réseau du système de communications par satellite,
et relier sous une commande basée à terre (25) ledit satellite (22) à ladite pluralité de passerelles terrestres et audit émetteur-récepteur sans fil sur la base desdites informations dans ladite base de données des utilisateurs (20) du réseau.

11. Procédé selon la revendication 10, dans lequel au moins une passerelle contient une copie de ladite base de données des utilisateurs (20) du réseau et comprend en outre l'étape consistant à :
traiter lesdites informations dans ladite base de données des utilisateurs du réseau afin de réaliser le transfert desdites liaisons de communications depuis ledit satellite (22) vers un second satellite.

12. Procédé selon la revendication 11, dans lequel ledit second satellite est en cours de passage au-dessus desdits utilisateurs pendant le transfert afin de conserver la couverture dans ladite zone de services terrestre.

13. Procédé selon la revendication 11 ou 12, comprenant en outre l'étape consistant à traiter le transfert par la passerelle des appels vers un autre satellite en cours de passage au-dessus dudit utilisateur.

14. Procédé selon l'une quelconque des revendications 7 à 13, comprenant en outre :
l'établissement d'un utilisateur (30) dudit appareil d'émetteur-récepteur sans fil en tant qu'utilisateur en déplacement en émettant une demande de déplacement à partir de l'utilisateur dans la zone de services de satellite, et
la mise à jour de la base de données des utilisateurs (20) du réseau afin d'inclure l'utilisateur (30) comme étant en déplacement.

15. Procédé selon la revendication 14, dans lequel l'utilisateur (30) est dans la zone de services de satellite.

16. Procédé selon la revendication 14, dans lequel l'utilisateur (30) est dans une zone de services terrestre à l'intérieur de la zone de services de satellite.

17. Procédé selon l'une quelconque des revendications 7 à 16, comprenant en outre l'étape consistant à lancer, par l'utilisateur (30) un appel entrant, à accepter au niveau de la passerelle (12, 14, 16, 18, 28) l'appel entrant provenant de l'utilisateur, et à établir un acheminement par la passerelle pour l'établissement d'appel.

18. Procédé selon l'une quelconque des revendications 7 à 17, comprenant en outre l'étape consistant à lancer, par tout appelant quelconque, un appel sortant provenant de l'appelant, et établissant l'acheminement par la passerelle pour l'établissement d'appel vers l'utilisateur.

19. Procédé selon l'une quelconque des revendications 7 à 18, comprenant en outre l'étape consistant à transmettre une commande sur le réseau terrestre à partir de la passerelle de coordination de réseau de communications (28) vers la passerelle sélectionnée parmi les passerelles terrestres, la commande transmise donnant pour instruction à la passerelle sélectionnée parmi les passerelles terrestres d'établir une liaison de communications sans fil entre l'émetteur-récepteur sans fil demandant un service et le réseau de communications terrestre.
